# EUROPEAN PATENT APPLICATION

(11) **EP 4 629 676 A1**
(43) Date of publication of application: **08.10.2025**
(21) Application number: 23910347.6
(22) Date of filing: 21.12.2023
(51) Int. Cl.: H04W 12/06

(54) **COMMUNICATION METHOD AND COMMUNICATION APPARATUS**

(30) Priority: 27.12.2022 CN 202211683816
(71) Applicant: Huawei Technologies Co., Ltd., Shenzhen, Guangdong 518129 (CN)
(72) Inventor: XU, Yishan, Shenzhen, Guangdong 518129 (CN); LI, Yan, Shenzhen, Guangdong 518129 (CN); HUANG, Kang, Shenzhen, Guangdong 518129 (CN); HAN, Zhilin, Shenzhen, Guangdong 518129 (CN)
(74) Representative: Pfenning, Meinig & Partner mbB
(86) International application number: PCT/CN2023/140770
(87) International publication number: WO 2024/140421

(57) **Abstract**

This application provides a communication method and a communication apparatus. In the communication method, a first core network device may send first information to a second core network device, the first information indicates the second core network device to perform security authentication of a first terminal device after random access of the first terminal device succeeds, the second core network device performs, based on the first information, security authentication of the first terminal device after random access of the first terminal device succeeds, and the first core network device performs transmission of service data of the first terminal device. In this way, the second core network device may perform security authentication of the first terminal device, and the first core network device may perform service data transmission of the first terminal device, avoiding overheads caused when both a security authentication module and a service data transmission module need to be integrated into one core network device (for example, the first core network device or the second core network device), and further reducing costs.

## Description

This application claims priority to Chinese Patent Application No. 202211683816.X, filed with the China National Intellectual Property Administration on December 27, 2022 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

In an existing communication system, a core network device needs to perform management for a terminal device. When different management needs to be performed on the terminal device, different functional modules need to be integrated into the core network device to implement the different management on the terminal device, resulting in high costs of the core network device.

### SUMMARY

Embodiments of this application provide a communication method and a communication apparatus, to reduce costs of a core network device.

According to a first aspect, a communication method is provided, including: A first core network device sends first information to a second core network device. The first information indicates the second core network device to perform security authentication of a first terminal device after random access of the first terminal device succeeds. The first core network device performs service data transmission of the first terminal device.

In the foregoing solution, a first core network device may send first information to a second core network device, the first information indicates the second core network device to perform security authentication of a first terminal device after random access of the first terminal device succeeds, the second core network device performs, based on the first information, security authentication of the first terminal device after random access of the first terminal device succeeds, and the first core network device performs transmission of service data of the first terminal device. In this way, the second core network device may perform security authentication of the first terminal device, and the first core network device may perform service data transmission of the first terminal device, which avoids overheads caused when both a security authentication module and a service data transmission module need to be integrated into one core network device (for example, the first core network device or the second core network device), thereby reducing costs.

Optionally, that the first information indicates the second core network device to perform security authentication of the first terminal device after random access of the first terminal device succeeds may be replaced with that the first information indicates the second core network device to perform security authentication of the first terminal device.

Optionally, that the first information indicates the second core network device to perform security authentication of the first terminal device after random access of the first terminal device succeeds may be replaced with that the first information indicates the second core network device to perform access control on the first terminal device; or may be replaced with that the first information indicates the second core network device to perform access control on the first terminal device after random access of the first terminal device succeeds.

Optionally, that the first information indicates the second core network device to perform security authentication of the first terminal device after random access of the first terminal device succeeds may be replaced with that the first information indicates the second core network device to perform access management on the first terminal device; or may be replaced with that the first information indicates the second core network device to perform access management on the first terminal device after random access of the first terminal device succeeds.

Optionally, the first information may directly or indirectly indicate the second core network device to perform security authentication of the first terminal device after random access of the first terminal device succeeds, or directly or indirectly indicate the second core network device to perform security authentication of the first terminal device.

Optionally, the first information may be indication information or an indicator.

Optionally, the first information may be a message type. For example, the message type indicates the second core network device to perform security authentication of the first terminal device, or indicates the second core network device to perform security authentication of the first terminal device after random access of the first terminal device succeeds.

Optionally, that the first core network device performs service data transmission of the first terminal device includes: The first core network device receives service data of the first terminal device, or the first core network device sends service data of the first terminal device to the first terminal device. Optionally, that the first core network device receives the service data of the first terminal device includes: The first core network device may receive the service data of the first terminal device via the second core network device or an access network device. Optionally, that the first core network device sends the service data of the first terminal device to the first terminal device includes: The first core network device sends the service data of the first terminal device to the first terminal device via the second core network device or the access network device.

Optionally, the first core network device may be a device (for example, a tag management function (tag management function, TMF)) having an internet-of-things terminal management function or a tag management function, a device that performs an internet-of-things service, a device that performs a service of an internet-of-things terminal device (for example, a tag), or a device that performs service data transmission of an internet-of-things terminal device. The first core network device is not limited in embodiments of this application. Optionally, the second core network device may be an access management device (for example, an access and mobility management function (access and mobility management function, AMF)), an authentication device (for example, an authentication server function (authentication server function, AUSF)), a data management device (for example, a unified data management (unified data management, UDM)), a network capability exposure device (for example, a network exposure function (network exposure function, NEF)), a data storage device (for example, a user data repository (unified data repository, UDR)), or an authentication server (for example, an authentication, authorization, and accounting server (authentication, authorization, and accounting server)). Alternatively, the second core network device may be a device configured to perform at least one of access management, access control, or security authentication of a terminal device. In a possible implementation, a device performing security authentication may be understood as a device participating in security authentication or triggering security authentication. A device performing access management may be understood as a device participating in access management or triggering access management. A device performing access control may be understood as a device participating in access control or triggering access control.

Optionally, the first information may be configured in the first core network device. In some possible implementations, the first information may be locally configured in the first core network device.

In some possible implementations, the communication method further includes: obtaining first security policy information. The first information includes the first security policy information, and the first security policy information indicates the second core network device to perform security authentication of the first terminal device after random access of the first terminal device succeeds.

In the foregoing solution, the first security policy information may indicate the second core network device to perform security authentication of the first terminal device after random access of the first terminal device succeeds. In other words, if the first core network device sends the first security policy information to the second core network device, it indicates that the second core network device is indicated to perform security authentication of the first terminal device after random access of the first terminal device succeeds. Therefore, the first core network device does not need to send additional indication information to indicate the second core network device to perform security authentication of the first terminal device after random access of the first terminal device succeeds.

Optionally, that the first security policy information indicates the second core network device to perform security authentication of the first terminal device after random access of the first terminal device succeeds may be replaced with that the first security policy information indicates the second core network device to perform security authentication of the first terminal device.

Optionally, that the first security policy information indicates the second core network device to perform security authentication of the first terminal device after random access of the first terminal device succeeds may be replaced with that the first security policy information indicates the second core network device to perform access control on the first terminal device; or may be replaced with that the first security policy information indicates the second core network device to perform access control on the first terminal device after random access of the first terminal device succeeds.

Optionally, that the first security policy information indicates the second core network device to perform security authentication of the first terminal device after random access of the first terminal device succeeds may be replaced with that the first security policy information indicates the second core network device to perform access management on the first terminal device; or may be replaced with that the first security policy information indicates the second core network device to perform access management on the first terminal device after random access of the first terminal device succeeds.

Optionally, the first information is the first security policy information.

Optionally, the first security policy information may include at least one of a security key, a random number, a token value, a security algorithm, an authentication manner, or a security policy.

Optionally, the first security policy information may be configured in the first core network device. In some possible implementations, the first security policy information may be locally configured in the first core network device.

In some possible implementations, the obtaining the first security policy information includes: receiving the first security policy information from a requester.

Optionally, the requester may send a request message to the first core network device. The request message may include the first security policy information. The first core network device may obtain the first security policy information from the request message.

In some possible implementations, the obtaining the first security policy information includes: receiving, from the requester, first identification information of the requester; and obtaining the first security policy information from a third core network device based on the first identification information.

Optionally, that the first core network device may obtain the first security policy information from the third core network device based on the first identification information includes: The first core network device may send the first identification information to the third core network device. The third core network device sends the first security policy information corresponding to the first identification information to the first core network device. To be specific, the requester corresponds to the first security policy information, different requesters may correspond to different security policy information, and when receiving the first identification information, the third core network device obtains the first security policy information corresponding to the requester identified by the first identification information, that is, the second core network device may perform, based on the first security policy information, security authentication for one or more terminal devices corresponding to the requester.

In some possible implementations, the obtaining the first security policy information includes: receiving second identification information of the first terminal device from the requester; and obtaining the first security policy information from the third core network device based on the second identification information.

Optionally, that the first core network device may obtain the first security policy information from the third core network device based on the second identification information includes: The first core network device may send the second identification information to the third core network device. The third core network device sends the first security policy information corresponding to the second identification information to the first core network device. To be specific, the first terminal device corresponds to the first security policy information, different terminal devices may correspond to different or same security policy information, and when receiving the second identification information, the third core network device obtains the first security policy information corresponding to the first terminal device identified by the second identification information.

Optionally, the third core network device may be an authentication device (for example, an AUSF), a data management device (for example, a UDM), a data storage device (for example, a UDR), an internet-of-things terminal management function (for example, a TMF), a network capability exposure device (for example, an NEF), a policy control device (for example, a policy control function (policy control function, PCF)), or a session management device (for example, an SMF).

In some possible implementations, the first security policy information includes an authentication manner corresponding to the security authentication.

Optionally, the authentication manner includes two-way authentication, one-way authentication performed by the requester or a network on the first terminal device, one-way authentication performed by the first terminal device on the network or the requester, no authentication, or the like.

In some possible implementations, the communication method further includes: receiving a request message of the requester. The request message is used to request to perform a first operation on the first terminal device. The sending the first information to the second core network device includes: sending the first information to the second core network device after receiving the request message.

In the foregoing solution, after receiving the request message of the requester, the first core network device may send the first information to the second core network device, thereby providing an occasion for sending the first information, and avoiding a problem that the first core network device does not learn of when to send the first information to the second core network device.

In some possible implementations, after the receiving the request message of the requester, the communication method further includes: sending a random access indication to an access network device via the second core network device. The random access indication indicates to perform random access for the first terminal device.

In the foregoing solution, the first core network device may send the random access indication to the access network device via the second core network device, and the access network device may perform random access of the first terminal device based on the random access indication.

In some possible implementations, after the receiving the request message of the requester, the communication method further includes: sending a random access indication to a reader via the second core network device. The random access indication indicates to perform random access for the first terminal device.

In some possible implementations, the reader may include an access network device or a terminal device.

In some possible implementations, the reader may include an access network device or a terminal device that has a reader function.

Optionally, the reader may be replaced with a reader/writer.

In the foregoing solution, the first core network device may send a random access indication to a reader via the second core network device, and the reader may perform random access of the first terminal device based on the random access indication.

Optionally, the first core network device may send the second identification information of the first terminal device to the second core network device. Optionally, the first core network device may send a service-based interface message to the second core network device. The service-based interface message includes the second identification information of the first terminal device. Optionally, the first core network device may send a service-based interface message to the second core network device. The service-based interface message may include the second identification information of the first terminal device and/or an N2 container, and the N2 container may include the random access indication and/or the second identification information of the first terminal device. Optionally, the service-based interface message may further include the first information. Optionally, the first information in the service-based interface message may include the second identification information of the first terminal device.

In some possible implementations, the communication method further includes: generating second information corresponding to the first operation; and sending the second information to the second core network device.

Optionally, the first core network device may send a service-based interface message to the second core network device. The service-based interface message may include the second information.

In some possible implementations, the communication method further includes: generating second information corresponding to the first operation; and sending the second information and third information to the second core network device. The third information indicates the second core network device to send the second information to the first terminal device after performing security authentication of the first terminal device.

In the foregoing solution, the first core network device may send the second information and the third information to the second core network device, and the second core network device may send, based on the third information, the second information to the first terminal device after performing security authentication of the first terminal device, thereby avoiding a security problem caused by blindly sending the second information to the first terminal device by the second core network device.

Optionally, the first core network device may send a service-based interface message to the second core network device. The service-based interface message may include the second information and the third information.

In some possible implementations, the second information indicates the terminal device to perform the first operation. Optionally, the second information includes a NAS message or NAS signaling.

In some possible implementations, the communication method further includes: receiving a request message of the requester, where the request message is used to request to perform a first operation on the first terminal device; and sending a random access indication to an access network device based on the request message, where the random access indication indicates to perform random access for the first terminal device. The sending the first information to the second core network device includes: sending the first information to the second core network device after receiving a registration request message from the first terminal device. That the first core network device receives, from the first terminal device, the registration request message indicates that random access of the first terminal device succeeds.

In the foregoing solution, the first core network device may send the first information to the second core network device after random access of the first terminal device succeeds, thereby providing an occasion for sending the first information.

In some possible implementations, after the sending the first information to the second core network device, the communication method further includes: receiving security authentication complete indication information sent by the second core network device; and sending fourth information to the first terminal device after receiving the security authentication complete indication information sent by the second core network device. The fourth information indicates to perform the first operation on the first terminal device.

In the foregoing solution, after the second core network device performs security authentication of the first terminal device, the first core network device may send, to the first terminal device, the fourth information indicating to perform the first operation on the first terminal device, so that the first terminal device may learn of the first operation.

In some possible implementations, the security authentication complete indication information may include an indication that security authentication succeeds or security authentication is completed. In some possible implementations, a message type, a message name, an information element type, an information element name, or the like may be used as the security authentication complete indication information to indicate that security authentication succeeds, security authentication is completed, or the like.

In some possible implementations, the first operation is an inventory operation, a read operation, a write operation, a disable operation, a locking operation, or a positioning operation.

In some possible implementations, after the performing service data transmission of the first terminal device, the communication method further includes: sending fifth information to the second core network device. The fifth information indicates the second core network device to stop performing security authentication of the first terminal device.

In the foregoing solution, after performing service data transmission of the first terminal device, the first core network device may send the fifth information to the second core network device, to indicate the first core network device to stop performing security authentication of the first terminal device, thereby avoiding signaling overheads caused by keeping performing security authentication of the first terminal device by the second core network device.

In some possible implementations, the first information specifically indicates the second core network device to perform security authentication of at least one terminal device of a same terminal type as the first terminal device after random access of the at least one terminal device succeeds.

In the foregoing solution, security authentication may be replaced with access control or access management.

In the foregoing solution, the access network device may be replaced with a reader (or reader/writer) or a device having a reader (or reader/writer) function.

According to a second aspect, a communication method is provided. The communication method is applied to a second core network device, and includes:
receiving first information from a first core network device, where the first information indicates the second core network device to perform security authentication of a first terminal device after random access of the first terminal device succeeds, and the first core network device is configured to perform service data transmission of the first terminal device; and performing, based on the first information, security authentication of the first terminal device after random access of the first terminal device succeeds.

In the foregoing solution, the second core network device may receive the first information from the first core network device, the first information indicates the second core network device to perform security authentication of the first terminal device after random access of the first terminal device succeeds, the second core network device performs, based on the first information, security authentication of the first terminal device after random access of the first terminal device succeeds, and the first core network device performs transmission of service data of the first terminal device. In this way, the second core network device may perform security authentication of the first terminal device, and the first core network device may perform service data transmission of the first terminal device, which avoids overheads caused when both a security authentication module and a service data transmission module need to be integrated into one core network device (for example, the first core network device or the second core network device), thereby reducing costs.

Optionally, that the first information indicates the second core network device to perform security authentication of the first terminal device after random access of the first terminal device succeeds may be replaced with that the first information indicates the second core network device to perform security authentication of the first terminal device; or may be replaced with that the first information indicates the second core network device to perform access control on the first terminal device after random access of the first terminal device succeeds. In this way, the second core network device may perform access control on the first terminal device based on the first information.

Optionally, that the first information indicates the second core network device to perform security authentication of the first terminal device after random access of the first terminal device succeeds may be replaced with that the first information indicates the second core network device to perform access control on the first terminal device.

Optionally, that the first information indicates the second core network device to perform security authentication of the first terminal device after random access of the first terminal device succeeds may be replaced with that the first information indicates the second core network device to perform access management on the first terminal device; or may be replaced with that the first information indicates the second core network device to perform access management on the first terminal device after random access of the first terminal device succeeds. In this way, the second core network device may perform access management on the first terminal device based on the first information.

Optionally, the first information may directly or indirectly indicate the second core network device to perform security authentication of the first terminal device after random access of the first terminal device succeeds, or directly or indirectly indicate the second core network device to perform security authentication of the first terminal device.

Optionally, the first information may be indication information or an indicator.

Optionally, the first information may be a message type. For example, the message type indicates the second core network device to perform security authentication of the first terminal device, or indicates the second core network device to perform security authentication of the first terminal device after random access of the first terminal device succeeds.

Optionally, that the first core network device performs service data transmission of the first terminal device includes: The first core network device receives service data of the first terminal device, or the first core network device sends service data of the first terminal device to the first terminal device. Optionally, that the first core network device receives the service data of the first terminal device includes: The first core network device may receive the service data of the first terminal device via the second core network device or an access network device. Optionally, that the first core network device sends the service data of the first terminal device to the first terminal device includes: The first core network device sends the service data of the first terminal device to the first terminal device via the second core network device or the access network device.

Optionally, the first core network device may be a device (for example, a TMF) having an internet-of-things terminal management function or a tag management function, a device that performs an internet-of-things service, a device that performs a service of an internet-of-things terminal device (for example, a tag), or a device that performs service data transmission of an internet-of-things terminal device. The first core network device is not limited in embodiments of this application. Optionally, the second core network device may be an access management device (for example, an AMF), an authentication device (for example, an AUSF), a data management device (for example, a UDM), a network capability exposure device (for example, an NEF), a data storage device (for example, a UDR), or an authentication server (for example, an AAA server). Alternatively, the second core network device may be a device configured to perform at least one of access management, access control, or security authentication of a terminal device. In a possible implementation, a device performing security authentication may be understood as a device participating in security authentication or triggering security authentication. A device performing access management may be understood as a device participating in access management or triggering access management. A device performing access control may be understood as a device participating in access control or triggering access control.

Optionally, the first information may be configured in the first core network device. In some possible implementations, the first information may be locally configured in the first core network device.

In some possible implementations, the first information includes first security policy information, and the first security policy information indicates the second core network device to perform security authentication of the first terminal device after random access of the first terminal device succeeds.

In the foregoing solution, the first security policy information may indicate the second core network device to perform security authentication of the first terminal device after random access of the first terminal device succeeds. In other words, if the second core network device receives the first security policy information from the first core network device, it indicates that the second core network device is indicated to perform security authentication of the first terminal device after random access of the first terminal device succeeds. Therefore, the second core network device does not need to receive additional indication information to indicate the second core network device to perform security authentication of the first terminal device after random access of the first terminal device succeeds.

Optionally, that the first security policy information indicates the second core network device to perform security authentication of the first terminal device after random access of the first terminal device succeeds may be replaced with that the first security policy information indicates the second core network device to perform security authentication of the first terminal device.

Optionally, that the first security policy information indicates the second core network device to perform security authentication of the first terminal device after random access of the first terminal device succeeds may be replaced with that the first security policy information indicates the second core network device to perform access control on the first terminal device; or may be replaced with that the first security policy information indicates the second core network device to perform access control on the first terminal device after random access of the first terminal device succeeds. In this way, the second core network device may perform access control on the first terminal device based on the first security policy information.

Optionally, that the first security policy information indicates the second core network device to perform security authentication of the first terminal device after random access of the first terminal device succeeds may be replaced with that the first security policy information indicates the second core network device to perform access management on the first terminal device; or may be replaced with that the first security policy information indicates the second core network device to perform access management on the first terminal device after random access of the first terminal device succeeds. In this way, the second core network device may perform access control on the first terminal device based on the first security policy information.

Optionally, the first information is the first security policy information.

Optionally, the first security policy information may include at least one of a security key, a random number, a token value, a security algorithm, an authentication manner, or a security policy.

Optionally, the first security policy information may be configured in the second core network device. In some possible implementations, the first security policy information may be locally configured in the second core network device.

In some possible implementations, the first security policy information includes an authentication manner corresponding to the security authentication.

The performing, based on the first information, security authentication of the first terminal device after random access of the first terminal device succeeds includes: performing, in the authentication manner included in the first security policy information in the first information, security authentication of the first terminal device after random access of the first terminal device succeeds.

In some possible implementations, the communication method further includes: receiving first identification information of a requester from the first core network device; and obtaining the first security policy information from a third core network device based on the first identification information.

Optionally, that the second core network device may obtain the first security policy information from the third core network device based on the first identification information includes: The second core network device may send the first identification information to the third core network device. The third core network device sends the first security policy information corresponding to the first identification information to the second core network device. To be specific, the requester corresponds to the first security policy information, different requesters may correspond to different security policy information, and when receiving the first identification information, the third core network device obtains the first security policy information corresponding to the requester identified by the first identification information, that is, the second core network device may perform, based on the first security policy information, security authentication for one or more terminal devices corresponding to the requester.

In some possible implementations, the communication method further includes: obtaining the first security policy information from the third core network device based on second identification information of the first terminal device.

Optionally, that the second core network device may obtain the first security policy information from the third core network device based on the second identification information includes: The second core network device may send the second identification information to the third core network device. The third core network device sends the first security policy information corresponding to the second identification information to the second core network device. To be specific, the first terminal device corresponds to the first security policy information, different terminal devices may correspond to different or same security policy information, and when receiving the second identification information, the third core network device obtains the first security policy information corresponding to the first terminal device identified by the second identification information.

Optionally, the third core network device may be an authentication device (for example, an AUSF), a data management device (for example, a UDM), a data storage device (for example, a UDR), an internet-of-things terminal management function (for example, a TMF), a network capability exposure device (for example, an NEF), a policy control device (for example, a PCF), or a session management device (for example, an SMF).

In some possible implementations, the first security policy information includes an authentication manner corresponding to the security authentication. The performing, based on the first information, security authentication of the first terminal device after random access of the first terminal device succeeds includes: performing, based on the first information and the authentication manner, security authentication of the first terminal device after random access of the first terminal device succeeds.

Optionally, the authentication manner includes two-way authentication, one-way authentication performed by the requester or a network on the first terminal device, one-way authentication performed by the first terminal device on the network or the requester, no authentication, or the like.

In some possible implementations, the first information includes the second identification information of the first terminal device. The performing security authentication of the first terminal device includes: performing security authentication of the first terminal device identified by the second identification information.

In the foregoing solution, the second core network device may perform, based on the second identification information of the first terminal device in the first information, security authentication of the first terminal device identified by the second identification information, thereby avoiding a problem that the second core network device does not learn of a terminal device for which security authentication is to be performed.

In some possible implementations, the communication method further includes: receiving a random access indication from the first core network device, where the random access indication indicates to perform random access for the first terminal device; sending the random access indication to an access network device; and receiving a registration request message from the first terminal device, where that the second core network device receives, from the first terminal device, the registration request message indicates that random access of the first terminal device succeeds. The performing security authentication of the first terminal device includes: performing security authentication of the first terminal device after receiving the registration request message from the first terminal device.

In the foregoing solution, the second core network device may send the random access indication from the first core network device to the access network device, and when the second core network device receives the registration request message from the first terminal device, it indicates that random access of the first terminal device is completed, and the second core network device may perform security authentication of the first terminal device, thereby providing an occasion for the second core network device to perform security authentication of the first terminal device.

Optionally, the second core network device may receive the second identification information of the first terminal device from the first core network device. Optionally, the second core network device may receive a service-based interface message from the first core network device. The service-based interface message includes the second identification information of the first terminal device. Optionally, the second core network device may receive a service-based interface message from the first core network device. The service-based interface message includes the second identification information of the first terminal device. Optionally, the second core network device may receive a service-based interface message from the first core network device. The service-based interface message includes the random access indication and/or the second identification information of the first terminal device. Optionally, the service-based interface message may further include the first information. Optionally, the first information in the service-based interface message may include the second identification information of the first terminal device.

In some possible implementations, the communication method further includes: receiving a random access indication from the first core network device, where the random access indication indicates to perform random access for the first terminal device; sending the random access indication to a reader; and receiving a registration request message from the first terminal device, where that the second core network device receives, from the first terminal device, the registration request message indicates that random access of the first terminal device succeeds. The performing security authentication of the first terminal device includes: performing security authentication of the first terminal device after receiving the registration request message from the first terminal device.

In some possible implementations, the reader may include an access network device or a terminal device.

In some possible implementations, the reader may include an access network device or a terminal device that has a reader function.

Optionally, the reader may be replaced with a reader/writer.

In some possible implementations, the registration request message includes third identification information. The performing security authentication of the first terminal device after receiving the registration request message from the first terminal device includes: after receiving the registration request message from the first terminal device, if a terminal device identified by the third identification information in the registration request message is the first terminal device identified by the second identification information, performing security authentication of the first terminal device.

Optionally, if the terminal device identified by the third identification information in the registration request message is not the first terminal device identified by the second identification information, the second core network device does not perform security authentication of the first terminal device, or rejects access of the first terminal device, or rejects registration of the first terminal device.

In some possible implementations, the communication method further includes: receiving second information from the first core network device. The second core network device sends the second information to the first terminal device after performing security authentication of the first terminal device.

In the foregoing solution, after performing security authentication of the first terminal device, the second core network device may send second information corresponding to a first operation to the first terminal device, thereby avoiding a security problem caused by blindly sending the second information to the first terminal device by the second core network device.

Optionally, the second core network device may receive a service-based interface message from the first core network device. The service-based interface message includes the second information.

In some possible implementations, the communication method further includes: receiving third information and second information corresponding to a first operation from the first core network device. The third information indicates the second core network device to send the second information to the first terminal device after performing security authentication of the first terminal device. After the second core network device performs security authentication of the first terminal device, the method further includes: sending a registration accept message to the first terminal device based on the third information. The registration accept message includes the second information.

In the foregoing solution, the first core network device may send the second information and the third information to the second core network device, and the second core network device may send, based on the third information, the second information to the first terminal device after performing security authentication of the first terminal device, thereby avoiding a security problem caused by blindly sending the second information to the first terminal device by the second core network device.

Optionally, the second core network device may receive a service-based interface message from the first core network device. The service-based interface message includes the second information and the third information.

In some possible implementations, the second information indicates the terminal device to perform the first operation. Optionally, the second information includes a NAS message or NAS signaling.

In some possible implementations, the first operation is an inventory operation, a read operation, a write operation, a disable operation, a locking operation, or a positioning operation.

In some possible implementations, before the second core network device performs security authentication of the first terminal device, the method further includes: receiving a registration request message from the first core network device. The registration request message includes third identification information of the first terminal device. The performing security authentication of the first terminal device includes: performing security authentication of the first terminal device identified by the third identification information. After the performing security authentication of the first terminal device identified by the third identification information, the method further includes: sending security authentication complete indication information to the first core network device.

In some possible implementations, after the performing security authentication of the first terminal device, the method further includes: receiving fifth information from the first core network device. The fifth information indicates the second core network device to stop performing security authentication of the first terminal device.

In the foregoing solution, after receiving the fifth information of the first core network device, the second core network device may stop, based on the fifth information, performing security authentication of the first terminal device, thereby avoiding signaling overheads caused by keeping performing security authentication of the first terminal device by the second core network device.

In some possible implementations, the first information indicates the second core network device to perform security authentication of at least one terminal device of a same terminal type as the first terminal device after random access of the at least one terminal device succeeds. The performing, based on the first information, security authentication of the first terminal device after random access of the first terminal device succeeds includes: performing, based on the first information, security authentication of the at least one terminal device after random access of the at least one terminal device succeeds.

In the foregoing solution, the first information may indicate the second core network device to perform security authentication of a terminal device of a terminal type. In this way, the second core network device may perform security authentication for the terminal type based on the first information. Therefore, the first core network device does not need to perform a plurality of indications for terminal devices of a same type, thereby reducing signaling overheads.

According to a third aspect, a communication method is provided. The communication method is applied to an access network device, and includes: receiving a first control plane message from a first terminal device; and sending a first uplink message to a first core network device or a second core network device based on a type of the first control plane message. The first core network device is configured to perform service data transmission of the first terminal device, and the second core network device is configured to perform security authentication of the first terminal device.

In the foregoing solution, the access network device may determine, based on the type of the first control plane message from the first terminal device, whether to send the first uplink message to the first core network device or send the first uplink message to the second core network device. To be specific, when the access network device has communication interfaces to both the first core network device and the second core network device, the access network device needs to determine, based on the type of the first control plane message from the first terminal device, a core network device to which the first uplink message is to be sent. The first uplink message varies with different core network devices. In this way, the second core network device may perform security authentication of the first terminal device when receiving the first uplink message, and the first core network device may perform service data transmission of the first terminal device when receiving the first uplink message, which avoids overheads caused when both a security authentication module and a service data transmission module need to be integrated into one core network device (for example, the first core network device or the second core network device), thereby reducing costs.

In some possible implementations, the first control plane message includes terminal type information of the first terminal device, and the terminal type information indicates that a terminal type of the first terminal device is a first terminal type. Before the sending the first uplink message to the first core network device or the second core network device based on the type of the first control plane message, the communication method further includes: determining, based on the first terminal type, send the first uplink message to the first core network device or the second core network device based on the type of the first control plane message.

Optionally, the first control plane message may indicate that the terminal type of the first terminal device is the first terminal type. For example, a message type of the first control plane message may indicate that the terminal type of the first terminal device is the first terminal type.

In the foregoing solution, if the first control plane message includes the terminal type of the first terminal device or the first control plane message indicates the terminal type of the first terminal device, the access network device determines to send the first uplink message to the first core network device or the second core network device based on the type of the first control plane message. For example, if the first terminal type is an internet-of-things terminal device, the access network device determines to send the first uplink message to the first core network device or the second core network device based on the type of the first control plane message. To be specific, the access network device generally does not need to determine, based on a terminal type, a core network device to which the first uplink message is to be sent, but when the terminal type of the first terminal device is an internet-of-things terminal device, the access network device needs to determine, based on the type of the first control plane message, a core network device to which the first uplink message is to be sent.

In some possible implementations, the sending the first uplink message to the first core network device or the second core network device based on the type of the first control plane message includes: if the type of the first control plane message is a first type, sending the first uplink message to the first core network device, where the message of the first type is used for information transmission; or if the type of the first control plane message is a second type, sending the first uplink message to the second core network device, where the message of the second type is used for security authentication.

In the foregoing solution, if the type of the first control plane message is the first type, the access network device sends the first uplink message to the first core network device; and if the type of the first control plane message is the second type, the access network device sends the first uplink message to the second core network device. In this way, the access network device may send different uplink messages to different core network devices based on different types of first control plane messages, thereby providing an uplink message transmission method.

Optionally, the first uplink message sent by the access network device to the first core network device is different from the first uplink message sent by the access network device to the second core network device.

In some possible implementations, the communication method further includes: receiving, from the first core network device, second information corresponding to a first operation; receiving a second control plane message from the second core network device; and when the second control plane message indicates that the security authentication of the first terminal device is completed, sending the second information to the first terminal device.

In the foregoing solution, after determining, based on the second control plane message, that the security authentication of the first terminal device is completed, the access network device may send the second information corresponding to the first operation to the first terminal device, thereby avoiding a security problem caused by sending the second information to the first terminal device before determining whether the first terminal device is secure.

In some possible implementations, the first operation is a read operation, a write operation, a disable operation, a locking operation, or a positioning operation.

In some possible implementations, the communication method further includes: receiving a random access indication sent by the first core network device or the second core network device, where the random access indication indicates to perform random access for the first terminal device; and performing random access of the first terminal device based on the random access indication. The receiving the first control plane message from the first terminal device includes: receiving the first control plane message from the first terminal device after performing random access of the first terminal device.

In the foregoing solution, the access network device may receive the first control plane message from the first terminal device after performing random access of the first terminal device based on the random access indication.

In the foregoing solution, the access network device may be replaced with a reader.

In some possible implementations, the reader may include an access network device or a terminal device.

In some possible implementations, the reader may include an access network device or a terminal device that has a reader function.

Optionally, the reader may be replaced with a reader/writer.

In the foregoing solution, security authentication may be replaced with access control or access management.

According to a fourth aspect, a communication method is provided. The communication method is applied to a first terminal device, and includes: The first terminal device determines whether security authentication needs to be performed. The first terminal device sends a first control plane message of a first type or a first control plane message of a second type to an access network device based on whether security authentication needs to be performed. The message of the first type is used for information transmission, the message of the second information is used for security authentication, the message of the first type corresponds to a first core network device, the first core network device is configured to perform service data transmission of the first terminal device, the message of the second type corresponds to a second core network device, and the second core network device is configured to perform security authentication of the first terminal device.

In the foregoing solution, the first terminal device may send different types of first control plane messages to the access network device based on whether security authentication needs to be performed, so that the access network device sends first uplink messages to different core network devices based on the different types of first control plane messages, and the different core network devices perform different functionalities. The second core network device may perform security authentication management on the first terminal device when receiving the first uplink message, and the first core network device may perform service data transmission of the first terminal device when receiving the first uplink message, which avoids overheads caused when both a security authentication module and a service data transmission module need to be integrated into one core network device (for example, the first core network device or the second core network device), thereby reducing costs.

In some possible implementations, that the first terminal device sends the first control plane message of the first type or the first control plane message of the second type to the access network device based on whether security authentication needs to be performed includes: if the first terminal device determines that security authentication needs to be performed for the first terminal device, sending the first control plane message of the second type to the access network device; or if the first terminal device determines that security authentication does not need to be performed for the first terminal device, sending the first control plane message of the first type to the access network device.

Optionally, the first control plane message may indicate that a terminal type of the first terminal device is a first terminal type. For example, a message type of the first control plane message may indicate that the terminal type of the first terminal device is the first terminal type.

In some possible implementations, that the first terminal device determines whether security authentication needs to be performed includes: The first terminal device determines, based on seventh information, whether security authentication needs to be performed. The seventh information indicates whether to perform security authentication of the first terminal device. Optionally, the access network device may broadcast the seventh information, or the first terminal device may store the seventh information. Optionally, the seventh information may be an authentication manner. To be specific, if the authentication manner indicated by the seventh information is two-way authentication, or one-way authentication performed by the first terminal device on a network or a requester, or one-way authentication performed by the network or the requester on the first terminal device, it indicates to perform security authentication of the first terminal device. If the authentication manner indicated by the seventh information is no authentication, it indicates not to perform security authentication of the first terminal device. Optionally, the seventh information may be a security parameter. If the access network device broadcasts the security parameter, it indicates to perform security authentication of the first terminal device; or if the access network device does not broadcast the security parameter, it indicates not to perform security authentication of the first terminal device. Alternatively, if the security parameter is configured and stored in the first terminal device, it indicates to perform security authentication of the first terminal device; or if the security parameter is not configured in the first terminal device, it may indicate not to perform security authentication of the first terminal device.

In some possible implementations, the first control plane message includes terminal type information of the first terminal device, and the terminal type information indicates that a terminal type of the first terminal device is a first terminal type.

Optionally, the first control plane message may indicate that the terminal type of the first terminal device is the first terminal type. For example, a message type of the first control plane message may indicate that the terminal type of the first terminal device is the first terminal type.

In the foregoing solution, security authentication may be replaced with access control or access management.

In the foregoing solution, the access network device may be replaced with a reader (or reader/writer) or a device having a reader (or reader/writer) function.

Specifically, for descriptions of the fourth aspect, refer to the descriptions of the third aspect. To avoid repetition, details are not described again.

According to a fifth aspect, this application provides a communication apparatus. The apparatus has a functionality of implementing behavior of the devices in the foregoing aspects and the possible implementations of the foregoing aspects. The functionality may be implemented by hardware, or may be implemented by executing corresponding software by hardware. The hardware or the software includes one or more modules or units corresponding to the foregoing functionality, for example, a determining module or unit, or a transceiver module or unit.

According to a sixth aspect, this application provides a communication apparatus. The apparatus includes a processor, the processor is coupled to a memory, the memory is configured to store a computer program or instructions, and the processor is configured to execute the computer program or the instructions stored in the memory, to perform the methods in the foregoing aspects and the possible implementations of the foregoing aspects.

For example, the processor is configured to execute the computer program or the instructions stored in the memory, to enable the apparatus to perform the methods in the foregoing aspects and the possible implementations of the foregoing aspects.

Optionally, the apparatus includes one or more processors.

Optionally, the apparatus may further include the memory coupled to the processor.

Optionally, the apparatus may include one or more memories.

Optionally, the memory and the processor may be integrated together or disposed separately.

Optionally, the apparatus may further include a transceiver.

According to a seventh aspect, this application provides a computer-readable storage medium, including computer instructions. When the computer instructions are run on an electronic device, the electronic device is enabled to perform the method in any one of the foregoing aspects or the possible implementations of the foregoing aspects, or the communication method described in any embodiment of this application.

According to an eighth aspect, this application provides a computer program product. When the computer program product runs on an electronic device, the electronic device is enabled to perform the method in any one of the foregoing aspects or the possible implementations of the foregoing aspects, or the communication method described in any embodiment of this application.

According to a ninth aspect, this application provides an apparatus, including a unit configured to perform the communication method described in any embodiment of this application.

### BRIEF DESCRIPTION OF DRAWINGS

FIG. 1 is a diagram of a system framework according to an embodiment of this application;
FIG. 2 is a diagram of another system architecture according to an embodiment of this application;
FIG. 3 is a diagram of still another system architecture according to an embodiment of this application;
FIG. 4 is a diagram of a communication method according to an embodiment of this application;
FIG. 5 is a diagram of another communication method according to an embodiment of this application;
FIG. 6 is a diagram of still another communication method according to an embodiment of this application;
FIG. 7 is a diagram of still another communication method according to an embodiment of this application;
FIG. 8 is a diagram of still another communication method according to an embodiment of this application; and
FIG. 9 is a block diagram of a communication apparatus according to an embodiment of this application.

### DESCRIPTION OF EMBODIMENTS

The following describes technical solutions in embodiments of this application with reference to accompanying drawings in embodiments of this application.

The technical solutions in embodiments of this application may be applied to various communication systems, for example, a global system for mobile communication (global system for mobile communication, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system, new radio (new radio, NR), or a future 6th generation (6th generation, 6G) system.

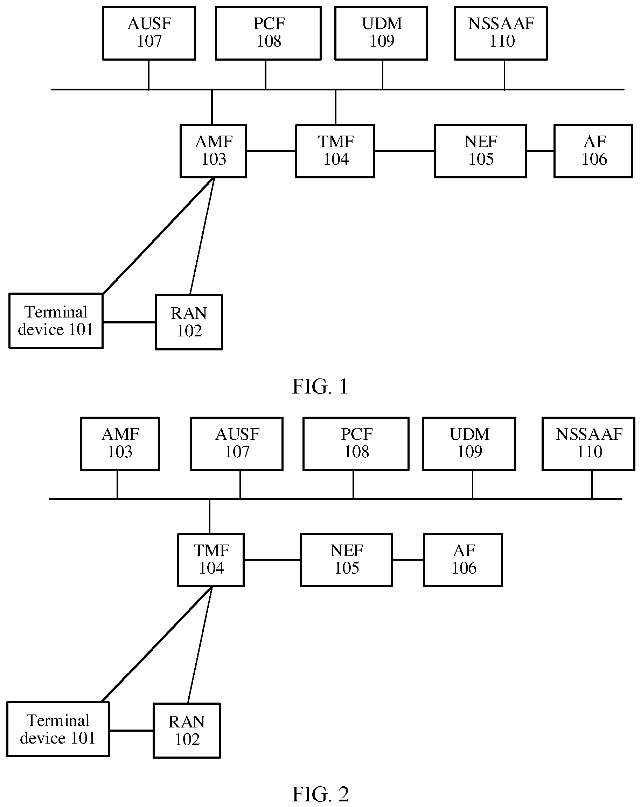

FIG. 1, FIG. 2, and FIG. 3 are diagrams of three system architectures used in embodiments of this application. A system shown in FIG. 1, FIG. 2, and FIG. 3 includes at least one of a terminal device 101, a radio access network (radio access network, RAN) 102, an AMF 103, a TMF 104, an NEF 105, an application function (application function, AF) 106, an AUSF 107, a policy control function (policy control function, PCF) 108, a UDM 109, or a network slice-specific authentication and authorization function (network slice-specific authentication and authorization function, NSSAAF) 110.

The terminal device 101 is also referred to as user equipment (user equipment, UE), a mobile station (mobile station, MS), a mobile terminal (mobile terminal, MT), an access terminal, a subscriber unit, a subscriber station, a mobile, a remote station, a remote terminal, a mobile device, a user terminal, a terminal, a wireless communication device, a user agent, a user apparatus, or the like.

The terminal device 101 may be a device that provides voice/data connectivity for a user, for example, a handheld device or an in-vehicle device having a wireless connection functionality. Currently, some examples of the terminal device include: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication functionality, a computing device or another processing device connected to a wireless modem, an in-vehicle device, a wearable device, a terminal device in a 5G network, and a terminal device in a future evolved public land mobile network (public land mobile network, PLMN); an internet-of-things terminal device, for example, an internet-of-things (internet-of-things, IoT) device such as a tag, a passive tag, an active tag, a semi-passive tag, a semi-active tag, a sensor, an electric meter, or a water meter; and an uncrewed aerial vehicle (unmanned aerial vehicle or uncrewed aerial vehicle, UAV) having a communication functionality. When the terminal device is a passive, semi-active, semi-passive, or active terminal device or tag, the terminal device may receive or send data by obtaining energy. The energy may be obtained in radio frequency, radio, solar energy, light energy, wind energy, water energy, heat energy, kinetic energy, or other manners. A manner in which the terminal device obtains the energy is not limited in this application. This is not limited in embodiments of this application. It may be understood that, when the terminal device is a passive or semi-passive terminal device, the terminal device may not have or depend on a power supply device such as a battery, but obtains energy from an environment for functionalities such as sensing, transmission, and distributed computing of data. When the terminal device is a semi-active or active terminal device, the terminal may have a built-in battery, but the battery may be used to supply power for an internal circuit, rather than actively transmit a signal. When the terminal device is a passive, semi-passive, semi-active, or active terminal device, the terminal device may have a built-in capacitor. The capacitor may store energy obtained by the terminal device. For example, the terminal device may obtain energy in a manner such as obtaining solar energy and store the energy in the capacitor.

It should be noted that the terminal device in this application may be in an internet-of-things terminal or tag form, or may be an internet-of-things terminal having a sensing functionality (for example, a tag having a sensing functionality), or may be in any terminal form. This is not limited in this application.

The RAN 102 may be a device communicating with the terminal device 101. The RAN 102 may also be referred to as an access network device, a radio access network device, or a reader (reader), and may be a transmission reception point (transmission reception point, TRP), an evolved NodeB (evolved NodeB, eNB, or eNodeB) in an LTE system, a home base station (for example, home evolved NodeB or home NodeB, HNB), a baseband unit (baseband unit, BBU), or a radio controller in a cloud radio access network (cloud radio access network, CRAN) scenario. Alternatively, the RAN 102 may be a relay station, an access point, an in-vehicle device, a wearable device, a network device in a 5G network, a network device in a future evolved PLMN network, or the like, or may be an access point (access point, AP) in a WLAN or a gNB in an NR system. Alternatively, the RAN 102 may be a city base station, a micro base station, a pico base station, a femto base station, or the like. This is not limited in this application.

The AMF 103 is mainly configured to perform mobility management, access management, and the like, and may be configured to implement functionalities other than session management in functionalities of a mobility management entity (mobility management entity, MME), for example, functionalities such as lawful intercept, access authorization (or authentication), registration of the terminal device 101, security authentication, mobility management, a tracking area update procedure, reachability detection, selection of a session management network element, or mobility state transition management. The AMF 103 may also be referred to as an access and mobility management function, an access and mobility management device, an access and mobility management network element, an access management device, a mobility management device, or the like. In a future communication system, the AMF 103 may also have another name. In embodiments of this application, a name of a network element having a functionality of managing mobility of the terminal device 101 is not limited.

An internet-of-things terminal management function (or referred to as a tag management function) may be, for example, the tag management function (tag management function, TMF) 104 in FIG. 1. Alternatively, the internet-of-things terminal management function may be an internet-of-things management function (ambient IoT management function, AIMF) obtaining ambient energy. The internet-of-things terminal management function is configured to perform transmission of service data of the terminal device 101 or perform internet-of-things terminal (or tag) management. For example, when the terminal device 101 is a tag, the internet-of-things terminal management function may perform transmission and/or management of service data of the tag. A name of the internet-of-things terminal management function (or referred to as a tag management function) is not limited in this application, and may be another name.

The NEF 105 is a network capability exposure function device between a core network device and the AF 106, and is configured to forward a message from the AF 106 to the core network device, and forward a message from the core network device to the AF 106.

The AF 106 is configured to provide application data for the UE 104, and may also be referred to as a third party or a requester.

The AUSF 107 is configured to perform authentication on the terminal device 101.

The PCF 108 is configured to implement a policy control functionality, a charging policy control functionality, quality of service (quality of service, QoS) control, and the like. When the PCF 108 performs QoS control, the PCF 108 may generate a QoS rule. The PCF 108 may also be referred to as a policy control function, a policy control device, a policy control function device, a policy control function network element, a policy control network element, or the like. In a future communication system, the PCF 108 may also have another name. In embodiments of this application, a name of a network element having a policy control functionality is not limited.

The UDM 109 is responsible for managing subscription information of the terminal device 101 or storing first security policy information. The UDM 109 may also be referred to as a data management function, a data management device, a data management function device, a data management function network element, a data management network element, a unified data management function, a unified data management device, a unified data management function device, a unified data management function network element, a unified data management network element, or the like. In a future communication system, the UDM 109 may also have another name. In embodiments of this application, a name of a network element having a data management function is not limited. In some embodiments, FIG. 1 to FIG. 3 may further include a UDR, or the UDM in FIG. 1 to FIG. 3 may be replaced with a user data repository (user data repository, UDR) (which may also be referred to as a user data repository device, a user data repository entity, or a user data repository network element), and may be understood as a name of a unified data storage network element in a 5G architecture. The user data repository mainly includes a functionality of accessing various types of data such as subscription data, policy data, and application data.

The NSSAAF 110 is configured to assist the AMF 103 in performing security authentication for the UE 104.

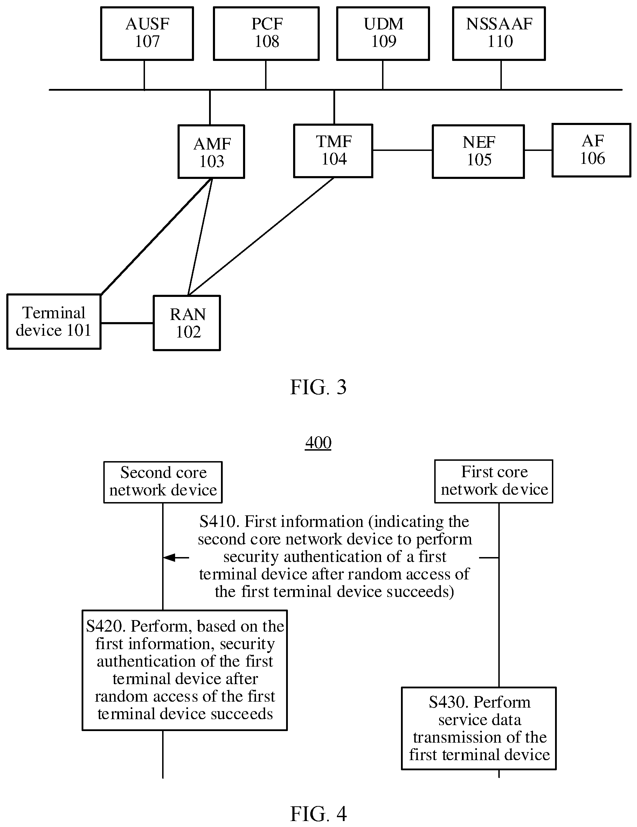

FIG. 1, FIG. 2, and FIG. 3 are diagrams of three different system architectures. In FIG. 1, there is an interface between the RAN 102 and the AMF 103, but there is no interface between the TMF 104 and the RAN 102. The RAN 102 needs to communicate with the TMF 104 via the AMF 103. In FIG. 2, there is an interface between the RAN 102 and the TMF 104, but there is no interface between the AMF 103 and the RAN 102. The RAN 102 needs to communicate with the AMF 103 via the TMF 104. In FIG. 3, the RAN 102 may have an interface to the AMF 103 and an interface to the TMF 104. The RAN 102 can communicate with the AMF 103 and the TMF 104.

It should be noted that what the network elements (such as the terminal device 101, the RAN 102, the AMF 103, the TMF 104, the NEF 105, the AF 106, the AUSF 107, the PCF 108, the UDM 109, and the NSSAAF 110) included in FIG. 1 are named are merely names, and the names do not constitute limitations on functionalities of the network elements. In a 5G network and another network in the future, the network elements may have other names. This is not specifically limited in embodiments of this application. For example, in a 6G network, a part or all of the network elements may reuse terms in 5G, or may have other names. A general explanation is provided herein, and details are not described below again.

It should be noted that the network elements in FIG. 1 do not necessarily exist simultaneously, and network elements needed may be determined as required. A connection relationship between the network elements in FIG. 1 is not uniquely determined, and may be adjusted as required.

It also should be noted that, in FIG. 1, a network element other than the terminal device 101 may be referred to as a network device. In other words, the network device may include one or more network elements other than the terminal device 101 in FIG. 1. The network device may include an access network device and a core network device. The RAN 102 in FIG. 1 may be referred to as an access network device, and a network element in FIG. 1 other than the RAN 102, the terminal device 101, and the DN 105 is referred to as a core network device.

In the following embodiments, for ease of description, numbers of network elements are omitted. For example, "UE" represents the "terminal device 101", and an "AMF" represents the "AMF 103".

In some embodiments, an internet-of-things communication system may include a terminal device, a reader (reader), and a server. For example, the terminal device may be the terminal device in FIG. 1, the reader may be the RAN in FIG. 1, and the server may be the AF in FIG. 1. In some embodiments, the terminal device may be an internet-of-things terminal device. The internet-of-things terminal device may include an internet-of-things device (for example, an ambient IoT device) obtaining ambient energy. The internet-of-things device obtaining ambient energy may obtain energy from an environment to supply energy required for communication. For example, the internet-of-things device obtaining ambient energy may include a passive internet-of-things terminal device, a semi-active internet-of-things terminal device, a semi-passive internet-of-things terminal device, or an active internet-of-things terminal device. In some embodiments, the reader may also be a terminal device, for example, may be a device such as a mobile phone, a mobile terminal, UE, an IoT device, or a handheld reader/writer that has a reader function. The reader performs non-contact two-way data communication with an internet-of-things terminal device in a radio frequency mode, and performs reading and writing on the internet-of-things terminal device in the radio frequency mode, to identify the internet-of-things terminal device and/or exchange data with the internet-of-things terminal device. For example, the internet-of-things terminal device may be an electronic tag or a radio frequency card. The reader may perform, in two manners, contactless two-way data communication with the internet-of-things terminal device in the wireless radio frequency mode. In one manner, the reader sends a radio frequency signal, and when the internet-of-things terminal device enters an effective identification range of the reader, the internet-of-things terminal device receives the radio frequency signal sent by the reader, and sends information stored in the internet-of-things terminal device to the reader by using energy obtained by an induced current. In the other manner, the internet-of-things terminal device may convert energy obtained in an environment into electric energy and store the electric energy in the internet-of-things terminal device, and actively send a signal of a specific frequency to the reader, and the reader receives the signal of the internet-of-things terminal device, decodes the signal, and sends the signal to the server.

In an existing communication system, a core network device needs to perform management for a terminal device. When the terminal device requires different management, different functional modules need to be integrated into the core network device to implement different management for the terminal device, resulting in high costs of the core network device.

In embodiments of this application, a first core network device may send first information to a second core network device. The first information indicates the second core network device to perform security authentication of a first terminal device after random access of the first terminal device succeeds. The second core network device performs, based on the first information, security authentication of the first terminal device after random access of the first terminal device succeeds. The first core network device may perform service data transmission of the first terminal device. In this way, the second core network device may perform security authentication of the first terminal device, and the first core network device may perform service data transmission of the first terminal device, which avoids overheads caused when both a security authentication module and a service data transmission module need to be integrated into one core network device (for example, the first core network device or the second core network device), thereby reducing costs.

The following describes tag operations used in embodiments of this application.
1. Tag inventory operation (or referred to as an inventory operation), that is, inventory an existing tag situation or obtain identification information of a tag.
2. Read operation, that is, read data from a tag. The tag may have a storage functionality, and a storage area of the tag may store data. If an operation requester intends to perform a read operation on the tag, the operation requester sends a read instruction to a reader. The reader performs the read operation on the tag according to the instruction to read data from the storage area of the tag, and sends the data to a server.
3. Write operation, that is, write data into a tag. The operation requester may send a write instruction to the reader. The reader performs a write operation on the tag according to the instruction, and writes data into a storage area of the tag.
4. Disable operation, also referred to as a deactivate operation. The operation requester may send a disable instruction to the reader. The disable instruction may include a tag identifier (that is, an identifier of a tag that is expected to be disabled). The reader performs a disable operation on the tag according to the disable instruction. After the disable operation is completed, the tag becomes deactivated or disabled, and cannot be inventoried or undergo another operation.
5. Locking operation. The operation requester may send a locking instruction to the reader. The locking instruction may include a tag identifier (that is, an identifier of a tag that is expected to be locked). The reader performs a locking operation on the tag according to the locking instruction. After the locking operation is completed, the tag is locked, and temporarily cannot undergo another operation.
6. Positioning operation. The operation requester may send a positioning instruction to the reader. The positioning instruction may include a tag identifier (that is, an identifier of a tag that is expected to be positioned). The reader obtains location information of the tag according to the positioning instruction, and sends the location information of the tag to the server.
7. Obtain tag information. In a possible implementation, the reader obtains or receives tag information sent by a tag. The reader sends the tag information to the operation requester or a core network device. In a possible implementation, before the reader obtains the tag information sent by the tag, the reader may receive an operation instruction, and send the operation instruction to the tag. The operation instruction may come from the operation requester, or may come from the core network device. This is not limited in this application. In a possible implementation, the tag information may include identification information of the tag and/or information stored in the tag.
8. Operation of message exchange with a tag. In a possible implementation, the reader sends a message from the operation requester (the server or an application function) to a tag. In another possible implementation, the reader receives a message sent by the tag, and sends the message from the tag to the operation requester (the server or the application function). In another possible implementation, before receiving the message sent by the tag, the reader may exchange a message, for example, a random number, with the tag.
9. Send payload (payload) to a tag. In a possible implementation, the server or the application function may send payload to a tag via the reader. After receiving the payload from the server or the application function, the reader sends the payload to the tag. In another possible implementation, the core network device may send payload to the tag via the reader. After receiving the payload from the core network device, the reader sends the payload to the tag. For example, the payload herein may be an instruction sent by the core network device, the server, or the application function to the tag; data written by the core network device, the server, or the application function to the tag; or application layer information sent by the core network device, the server, or the application function to the tag. Alternatively, the payload herein may be other information related to the tag. This is not limited in this application.

The following describes, with reference to FIG. 4, a communication method 400 provided in an embodiment of this application. The method shown in FIG. 4 is applicable to the system frameworks shown in FIG. 1 and FIG. 2. As shown in FIG. 4, the communication method 400 includes the following steps.

S410. A first core network device sends first information to a second core network device, and the second core network device receives the first information from the first core network device. The first information indicates the second core network device to perform security authentication of a first terminal device after random access of the first terminal device succeeds.

Optionally, the first information indicates the second core network device to perform security authentication of the first terminal device, or indicates the second core network device to perform security authentication of the first terminal device after random access of the first terminal device succeeds. The second core network device may learn, based on the first information from the first core network device, that security authentication of the first terminal device needs to be performed. A form of the first information may not be limited.

Optionally, that the first information indicates the second core network device to perform security authentication of the first terminal device after random access of the first terminal device succeeds may be replaced with that the first information indicates the second core network device to perform access control on the first terminal device; or may be replaced with that the first information indicates the second core network device to perform access control on the first terminal device after random access of the first terminal device succeeds.

Optionally, that the first information indicates the second core network device to perform security authentication of the first terminal device after random access of the first terminal device succeeds may be replaced with that the first information indicates the second core network device to perform access management on the first terminal device; or may be replaced with that the first information indicates the second core network device to perform access management on the first terminal device after random access of the first terminal device succeeds.

Optionally, the first information may directly or indirectly indicate the second core network device to perform security authentication of the first terminal device after random access of the first terminal device succeeds, or directly or indirectly indicate the second core network device to perform security authentication of the first terminal device.

Optionally, the first information may be indication information or an indicator. For example, the indication information may be an indication, and the indicator may be an indicator. Optionally, when the first information is indication information, the indication information may be an authentication required indication, an access control required indication, or an authorization required indication. Optionally, when the first information is an indicator, the indicator may be an authentication required indicator, an access control required indicator, or an authorization required indicator.

In some embodiments, the first information may be a message type. For example, the message type indicates the second core network device to perform security authentication of the first terminal device, or indicates the second core network device to perform security authentication of the first terminal device after random access of the first terminal device succeeds. To be specific, when receiving a message of a specific message type from the first core network device, the second core network device may learn that security authentication of the first terminal device needs to be performed. For another message type, the second core network device may not perform security authentication of the first terminal device. In other words, the first core network device may not send the message type to the second core network device, but send a message to the second core network device, and if a type of the message is the specific message type, it indicates that security authentication of the first terminal device needs to be performed. For example, the specific message type may be an Namf_AccessControl request or an Namf_AmbientIoTAuthentication request. If the second core network device receives an Namf_AccessControl request or an Namf_AmbientIoTAuthentication request from the first core network device, and the Namf_AccessControl request or the Namf_AmbientIoTAuthentication request includes second identification information of the first terminal device, the second core network device determines to perform security authentication of the first terminal device identified by the second identification information. If a message received by the second core network device from the first core network device includes the second identification information of the first terminal device, but the message is not an Namf_AccessControl request or an Namf_AmbientIoTAuthentication request, the second core network device does not perform security authentication of the first terminal device identified by the second identification information in the message. A specific name of the message type is not limited in this application, and the foregoing names are merely examples.

Optionally, the first information may indicate the second core network device to perform security authentication of at least one terminal device of a same terminal type as the first terminal device after random access of the at least one terminal device succeeds, or indicate the second core network device to perform security authentication of the at least one terminal device of the same terminal type as the first terminal device. Optionally, the at least one terminal device may include the first terminal device. This is not limited in embodiments of this application. In other words, the first information may indicate to perform security authentication of one terminal device, or may indicate to perform security authentication of a terminal device of one terminal type.

Optionally, the first core network device may obtain first security policy information. In this case, the first information sent to the second core network device may include the first security policy information. The first security policy information indicates the second core network device to perform security authentication of the first terminal device after random access of the first terminal device succeeds, or indicate the second core network device to perform security authentication of the first terminal device. In a possible implementation, the first information is the first security policy information.

Optionally, the first security policy information may include at least one of a security key, a random number, a token (token) value, a security algorithm, an authentication manner, or a security policy. In a possible implementation, the second core network device may perform security authentication based on the random number and/or the security key. For example, when performing security authentication of the first terminal device, the second core network device may perform an operation on the random number by using the security key (for example, perform an encryption operation on the random number by using the security key), to obtain a check value (for example, a medium access control (medium access control, MAC) value), and send the check value to the first terminal device. Alternatively, the second core network device performs an operation on a check value received from the first terminal device and the security key (for example, decrypt the check value by using the security key), to obtain a random number. Optionally, the authentication manner includes two-way authentication, one-way authentication performed by a requester on the first terminal device, one-way authentication performed by the first terminal device on the requester, one-way authentication performed by a network on the first terminal device, one-way authentication performed by the first terminal device on the network, no authentication, or the like. For example, the first information has a first bit value of 00 indicating no authentication, 01 indicating one-way authentication performed by the first terminal device on the requester (or one-way authentication performed by the first terminal device on the network), 10 indicating one-way authentication performed by the requester on the first terminal device (or one-way authentication performed by the network on the first terminal device), or 11 indicating two-way authentication. To be specific, if the authentication manner included in the first security policy information sent by the first core network device to the second core network device is two-way authentication or one-way authentication, the second core network device learns that security authentication needs to be performed on the first terminal device. If the authentication manner included in the first security policy information sent by the first core network device to the second core network device is no authentication, the second core network device learns that security authentication does not need to be performed on the first terminal device. Optionally, the security policy may include at least one of encryption protection, integrity protection, a non-access stratum (non-access stratum, NAS) security policy, or an access stratum (access stratum, AS) security policy. For example, the NAS security policy may include performing NAS security protection or not performing NAS security protection, and the AS security policy may include performing AS security protection or not performing AS security protection. Optionally, at least one of the security key, the random number, or the token value in the first security policy information may be referred to as a security parameter.

The following describes three manners in which the first core network device obtains the first security policy information.

Manner 1: The first core network device may receive the first security policy information from the requester.

Optionally, the requester may send a request message to the first core network device. The request message may include the first security policy information. Optionally, the request message may further include the second identification information of the first terminal device and an operation type. The request message indicates that a first operation is requested to be performed on the first terminal device identified by the second identification information, and the operation type indicates the first operation. Optionally, a type of the request message may indicate the first operation. For example, if the request message from the requester belongs to a first type, and the request message includes the second identification information, it indicates that the first operation corresponding to the first type is requested to be performed on the first terminal device identified by the second identification information. For another example, if the request message from the requester belongs to a second type, and the request message includes the second identification information, it indicates that a second operation corresponding to the second type is to be performed on the first terminal device identified by the second identification information. In this way, the request message does not need to carry an additional parameter to indicate the first operation, thereby reducing overheads.

Manner 2: The first core network device may receive, from the requester, first identification information of the requester, and the first core network device may obtain the first security policy information from a third core network device based on the first identification information.

Optionally, that the first core network device may obtain the first security policy information from the third core network device based on the first identification information includes: The first core network device may send the first identification information to the third core network device. The third core network device returns the first security policy information corresponding to the first identification information to the first core network device. To be specific, the requester corresponds to the first security policy information, different requesters may correspond to different security policy information, and when receiving the first identification information, the third core network device determines the first security policy information corresponding to the requester identified by the first identification information. Optionally, before the first core network device may obtain the first security policy information from the third core network device based on the first identification information, the manner further includes: The requester may store the first security policy information in the third core network device, or the first security policy information may be configured in the third core network device. For example, there is a correspondence between the first identification information of the requester and the first security policy information. The correspondence may be configured in the third core network device, or stored in the third core network device by the requester. In this way, after receiving the first identification information from the first core network device, the third core network device may obtain, based on the correspondence, the first security policy information corresponding to the first identification information, and send the first security policy information to the first core network device. In a possible implementation, the obtaining may include determining, generating, or extracting.

Optionally, terminal devices of a same terminal type may correspond to one requester. In this way, when the requester requests to perform an operation on terminal devices of a same type, the first security policy information obtained by the first core network device may be security policy information for the terminal devices of the same type. In this way, security policy information for the terminal devices of the same type may be the same, which is all the first security policy information.

Optionally, at least one terminal device may correspond to one requester. In this way, when the requester requests to perform an operation on at least one terminal device, the first security policy information obtained by the first core network device based on the first identification information may be security policy information for the at least one terminal device. In this way, security policy information for the at least one terminal device may be the same, which is all the first security policy information. For example, the request message from the requester may further include at least one piece of identification information, and each of the at least one piece of identification information may identify each of the at least one terminal device, indicating that the requester requests to perform an operation on the at least one terminal device identified by the at least one piece of identification information.

Optionally, the request message may further include the second identification information of the first terminal device and an operation type, indicating that a first operation is requested to be performed on the first terminal device identified by the second identification information. The operation type indicates the first operation. Optionally, a type of the request message may indicate the first operation. For example, if the request message from the requester belongs to a first type, and the request message includes the second identification information, it indicates that the first operation corresponding to the first type is requested to be performed on the first terminal device identified by the second identification information. For another example, if the request message from the requester belongs to a second type, and the request message includes the second identification information, it indicates that a second operation corresponding to the second type is to be performed on the first terminal device identified by the second identification information. In this way, the request message does not need to carry an additional parameter to indicate the first operation, thereby reducing overheads.

Manner 3: The first core network device may receive the second identification information of the first terminal device from the requester, and the first core network device may obtain the first security policy information from the third core network device based on the second identification information.

Optionally, that the first core network device may obtain the first security policy information from the third core network device based on the second identification information includes: The first core network device may send the second identification information to the third core network device. The third core network device returns the first security policy information corresponding to the second identification information to the first core network device. To be specific, the first terminal device corresponds to the first security policy information, different terminal devices may correspond to different or same security policy information, and when receiving the second identification information, the third core network device obtains the first security policy information corresponding to the first terminal device identified by the second identification information. Optionally, before the first core network device may obtain the first security policy information from the third core network device based on the second identification information, the manner further includes: The requester may store the first security policy information in the third core network device, or the first security policy information may be configured in the third core network device. For example, there is a correspondence between the second identification information of the first terminal device and the first security policy information. The correspondence may be configured in the third core network device, or stored in the third core network device by the requester. In this way, after receiving the second identification information from the first core network device, the third core network device may obtain the first security policy information corresponding to the second identification information, and return the first security policy information to the first core network device.

Optionally, the first information in S410 may include the second identification information of the first terminal device.

Optionally, the first information in S410 may include the first security policy information and the second identification information, and the first security policy information indicates the second core network device to perform, after random access of the first terminal device identified by the second identification information succeeds, security authentication of the first terminal device. Alternatively, the first security policy information in the first information indicates the second core network device to perform security authentication of the at least one terminal device of the same terminal type as the first terminal device after random access of the at least one terminal device succeeds. In other words, in this case, security policy information for the at least one terminal device is all the first security policy information.

S420. The second core network device performs, based on the first information, security authentication of the first terminal device after random access of the first terminal device succeeds.

Optionally, when the first information may indicate the second core network device to perform security authentication of the at least one terminal device of the same terminal type as the first terminal device after random access of the at least one terminal device succeeds, S420 includes: The second core network device performs, based on the first information, security authentication of the at least one terminal device after random access of the at least one terminal device succeeds. In this way, the second core network device may perform security authentication of the at least one terminal device based on the first information from the first core network device, thereby avoiding signaling overheads caused when the first core network device needs to perform at least one indication.

The following describes three manners in which the second core network device obtains the first security policy information.

Manner 1: If the first information includes the first security policy information, S420 includes: The second core network device performs, based on the first security policy information in the first information, security authentication of the first terminal device after random access of the first terminal device succeeds.

Optionally, if the first security policy information includes an authentication manner, and the authentication manner is two-way authentication, one-way authentication performed by the network or the requester on the terminal device, or one-way authentication performed by the terminal device on the network or the requester, that the second core network device performs, based on the first security policy information in the first information, security authentication of the first terminal device after random access of the first terminal device succeeds includes: The second core network device performs, in the authentication manner included in the first security policy information, security authentication of the first terminal device after random access of the first terminal device succeeds.

Optionally, if the first information further includes the second identification information of the first terminal device, the second identification information is used to identify the first terminal device, and the first security policy information indicates the second core network device to perform security authentication of the first terminal device after random access of the first terminal device succeeds, that the second core network device performs, based on the first security policy information in the first information, security authentication of the first terminal device after random access of the first terminal device succeeds includes: The second core network device performs, after random access of the first terminal device identified by the second identification information succeeds, security authentication of the first terminal device based on the first security policy information in the first information.

Optionally, if the first information further includes the second identification information of the first terminal device, the second identification information is used to identify the first terminal device, and the first security policy information indicates the second core network device to perform security authentication of the at least one terminal device of the same terminal type as the first terminal device after random access of the at least one terminal device succeeds, the second core network device performs, based on the first security policy information, security authentication of the at least one terminal device after random access of the at least one terminal device succeeds. The at least one terminal device may include the first terminal device.

Manner 2: The second core network device may receive the first identification information of the requester from the first core network device, and obtain the first security policy information from the third core network device based on the first identification information of the requester. That the second core network device obtains the first security policy information from the third core network device based on the first identification information includes: The second core network device may send the first identification information to the third core network device. The third core network device returns the first security policy information corresponding to the first identification information to the second core network device. To be specific, the requester corresponds to the first security policy information, different requesters may correspond to different security policy information, and when receiving the first identification information, the third core network device determines the first security policy information corresponding to the requester identified by the first identification information. Optionally, terminal devices of a same terminal type correspond to one requester. In this way, when the requester requests to perform an operation on terminal devices of a same type, the first security policy information obtained by the second core network device may be security policy information for the terminal devices of the same type. In this way, security policy information for the terminal devices of the same type may be the same, which is all the first security policy information. Therefore, in this case, the first information sent by the first core network device may not include the first security policy information, and the second core network device may obtain the first security policy information from the third core network device based on the first identification information of the requester. Optionally, before the second core network device may obtain the first security policy information from the third core network device based on the first identification information of the requester, the manner further includes: The requester may store the first security policy information in the third core network device, or the first security policy information may be configured in the third core network device. For example, there is a correspondence between the first identification information of the requester and the first security policy information. The correspondence may be configured in the third core network device, or stored in the third core network device by the requester. In this way, after receiving the first identification information from the second core network device, the third core network device may obtain, based on the correspondence, the first security policy information corresponding to the first identification information, and send the first security policy information to the second core network device. In a possible implementation, the obtaining may be understood as determining, generating, or extracting.

Optionally, if the first security policy information obtained based on the first identification information of the requester includes an authentication manner, and the authentication manner is two-way authentication, or one-way authentication performed by the network or the requester on the terminal device, or one-way authentication performed by the terminal device on the network or the requester, S420 includes: The second core network device performs, based on the first information and the authentication manner, security authentication of the first terminal device after random access of the first terminal device succeeds.

Optionally, if the first information further includes the second identification information of the first terminal device, and the second identification information is used to identify the first terminal device, that the second core network device performs, based on the first information and the authentication manner, security authentication of the first terminal device after random access of the first terminal device succeeds includes: The second core network device performs, after random access of the first terminal device identified by the second identification information succeeds, security authentication of the first terminal device in the authentication manner.

Optionally, if the first information further includes the second identification information of the first terminal device, the second identification information is used to identify the first terminal device, and the first information indicates the second core network device to perform security authentication of the at least one terminal device of the same terminal type as the first terminal device after random access of the at least one terminal device succeeds, the second core network device performs, based on the first information and the authentication manner, security authentication of the at least one terminal device after random access of the at least one terminal device succeeds. The at least one terminal device may include the first terminal device.

Manner 3: The first information includes the second identification information of the first terminal device, and the second core network device obtains the first security policy information from the third core network device based on the second identification information. Optionally, that the second core network device obtains the first security policy information from the third core network device based on the second identification information includes: The second core network device sends the second identification information to the third core network device. The third core network device returns the first security policy information corresponding to the second identification information to the first core network device. To be specific, the first terminal device corresponds to the first security policy information, different terminal devices may correspond to different or same security policy information, and when receiving the second identification information, the third core network device obtains the first security policy information corresponding to the first terminal device identified by the second identification information. Therefore, in this case, the first information sent by the first core network device may not include the first security policy information, and the second core network device may obtain the first security policy information from the third core network device based on the second identification information of the first terminal device. Optionally, before the second core network device may obtain the first security policy information from the third core network device based on the second identification information, the manner further includes: The requester may store the first security policy information in the third core network device, or the first security policy information may be configured in the third core network device. For example, there is a correspondence between the second identification information of the first terminal device and the first security policy information. The correspondence may be configured in the third core network device, or stored in the third core network device by the requester. In this way, after receiving the second identification information from the second core network device, the third core network device may obtain the first security policy information corresponding to the second identification information, and return the first security policy information to the first core network device.

Optionally, if the first security policy information obtained based on the second identification information of the first terminal device includes an authentication manner, and the authentication manner is two-way authentication, or one-way authentication performed by the network or the requester on the terminal device, or one-way authentication performed by the terminal device on the network or the requester, and the second identification information is used to identify the first terminal device, S420 includes: The second core network device performs, after random access of the first terminal device identified by the second identification information succeeds, security authentication of the first terminal device in the authentication manner.

Optionally, if the first security policy information obtained based on the second identification information of the first terminal device includes an authentication manner, and the authentication manner is two-way authentication, or one-way authentication performed by the network or the requester on the terminal device, or one-way authentication performed by the terminal device on the network or the requester, and the first information indicates the second core network device to perform security authentication of the at least one terminal device of the same terminal type as the first terminal device after random access of the at least one terminal device succeeds, S420 includes: The second core network device performs, based on the first information and the authentication manner, security authentication of each of the at least one terminal device after random access of each of the at least one terminal device succeeds. The at least one terminal device may include the first terminal device. In other words, in this case, the at least one terminal device may have a same authentication manner.

Alternatively, if the first information or the first security policy information indicates the second core network device to perform access control on the first terminal device, or indicates the second core network device to perform access control on the first terminal device after random access of the first terminal device succeeds, in S420, the second core network device performs access control on the first terminal device.

Alternatively, if the first information or the first security policy information indicates the second core network device to perform access management on the first terminal device, or indicates the second core network device to perform access management on the first terminal device after random access of the first terminal device succeeds, in S420, the second core network device performs access management on the first terminal device.

It should be noted that, that the second core network device performs access control or access management on the first terminal device is similar to that the second core network device performs security authentication of the first terminal device. To avoid repetition, details are not described. Therefore, this embodiment of this application is applicable to security authentication and access management or access control. However, this embodiment of this application focuses on describing security authentication.

S430. The first core network device performs service data transmission of the first terminal device.

Optionally, S430 includes: The first core network device receives service data of the first terminal device. For example, the request message sent by the requester includes an operation type, the operation type indicates a first operation, the first operation is a read operation, and the service data of the first terminal device is service data corresponding to the read operation.

Optionally, S430 includes: The first core network device sends service data to the first terminal device. For example, the request message sent by the requester includes an operation type, the operation type indicates a first operation, the first operation is a write operation, and the service data of the first terminal device is service data corresponding to the write operation.

Optionally, if the second core network device performs security authentication of the at least one terminal device of the same terminal type as the first terminal device, the first core network device may further perform service data transmission of the at least one terminal device.

Optionally, the first core network device may be a device (for example, a TMF) having an internet-of-things terminal management function or a tag management function, a device that performs an internet-of-things service, a device that performs a service of an internet-of-things terminal device (for example, a tag), or a device that performs service data transmission of an internet-of-things terminal device. The first core network device is not limited in embodiments of this application. Optionally, the second core network device may be an access management device (for example, an AMF), an authentication device (for example, an AUSF), a data management device (for example, a UDM), a network capability exposure device (for example, an NEF), a data storage device (for example, a UDR), or an authentication server (for example, an AAA server). Alternatively, the second core network device may be a device configured to perform at least one of access management, access control, or security authentication of a terminal device. In a possible implementation, a device performing security authentication may be understood as a device participating in security authentication or triggering security authentication. A device performing access management may be understood as a device participating in access management or triggering access management. A device performing access control may be understood as a device participating in access control or triggering access control. The third core network device may be an authentication device (for example, an AUSF), a data management device (for example, a UDM), a data storage device (for example, a UDR), an internet-of-things terminal management function (for example, a TMF), a network capability exposure device (for example, an NEF), a policy control device (for example, a PCF), or a session management device (for example, an SMF). The second core network device and the third core network device are not a same device. For example, if the second core network device is an AUSF, the third core network device may be a UDM, a PCF, an NEF, or a UDR.

In the foregoing solution, a first core network device may send first information to a second core network device, to indicate the second core network device to perform security authentication of a first terminal device after random access of the first terminal device succeeds, the second core network device performs, based on the first information, security authentication of the first terminal device after random access of the first terminal device succeeds, and the first core network device performs transmission of service data of the first terminal device. In this way, the second core network device may perform security authentication of the first terminal device, and the first core network device may perform service data transmission of the first terminal device, which avoids overheads caused when both a security authentication module and a service data transmission module need to be integrated into one core network device (for example, the first core network device or the second core network device), thereby reducing costs.

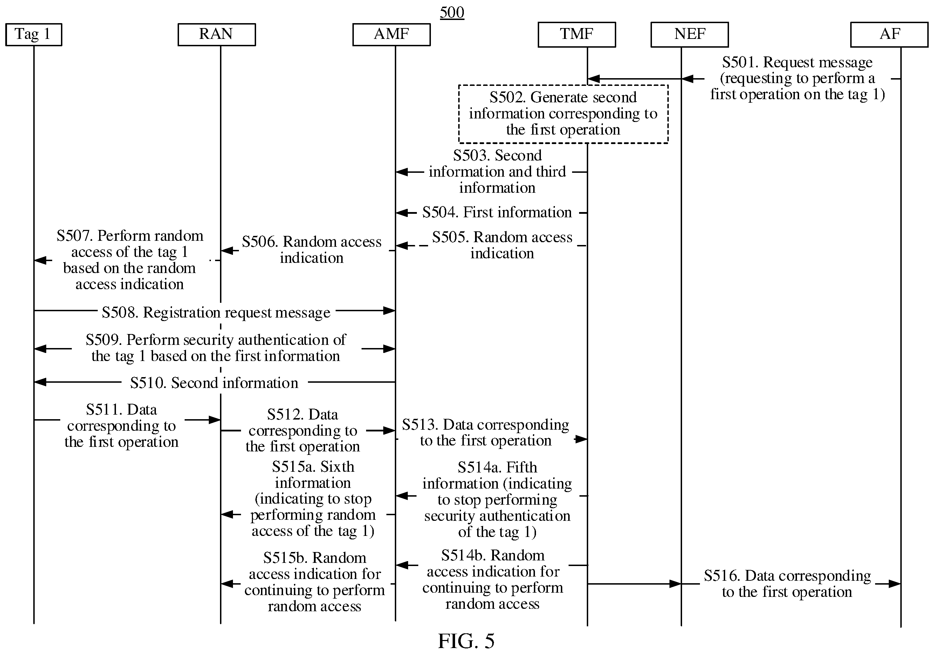

The following describes, with reference to FIG. 5, a communication method 500 provided in an embodiment of this application in the architecture shown in FIG. 1. In the communication method 500, an example in which a first core network device is a TMF, a second core network device is an AMF, a requester is an AF, an access network device is a RAN, a first terminal device is a tag 1 (tag 1), and a second core network device performs security authentication of the tag 1 is used for description, but this embodiment of this application is not limited thereto. As shown in FIG. 5, the communication method 500 includes the following steps.

S501. The AF sends a request message to the TMF via the NEF, and the TMF receives the request message from the AF via the NEF. The request message is used to request to perform a first operation on the tag 1.

Alternatively, S501 may be replaced with that The AF may send a request message to the TMF, and the TMF receives the request message from the AF. The request message is used to request to perform a first operation on the tag 1. That is, the AF may directly send the request message to the TMF without forwarding by the NEF.

Optionally, the request message includes an operation type, and the operation type indicates the first operation, indicating that the request message requests to perform the first operation indicated by the operation type. The operation type may also be referred to as an instruction type.

Optionally, a message type of the request message may indicate the first operation. For example, if the request message from the requester belongs to a type 1, and the request message includes second identification information, it indicates that the first operation corresponding to the type 1 is requested to be performed on the tag 1 identified by the second identification information. In this way, the request message does not need to carry an additional parameter to indicate the first operation, thereby reducing overheads.

Optionally, the first operation may be a read operation, a write operation, a disable operation, a locking operation, a positioning operation, an inventory operation, an operation of obtaining tag information, an operation of message exchange with a tag, or an operation of sending payload to a tag. A name or a type of the first operation is not limited in this application. When the first operation is a read operation, a write operation, a disable operation, a locking operation, a positioning operation, an operation of obtaining tag information, an operation of message exchange with a tag, or an operation of sending payload to a tag, the tag 1 also needs to be inventoried first, that is, third identification information of the tag 1 needs to be obtained. If the third identification information of the tag 1 is obtained, the read operation, the write operation, the disable operation, the locking operation, the positioning operation, the operation of obtaining tag information, the operation of message exchange with a tag, or the operation of sending payload to a tag may continue to be performed on the tag 1. Optionally, the first operation may alternatively be another operation. The first operation is not limited in embodiments of this application.

Optionally, the request message includes the second identification information of the tag 1 and the operation type, and the request message indicates that the first operation indicated by the operation type is requested to be performed on the tag 1 identified by the second identification information. Alternatively, the request message may include the second identification information but does not include the operation type, and the message type of the request message may indicate to perform the first operation on the tag 1 identified by the second identification information.

Optionally, the request message may alternatively include at least one piece of identification information, the at least one piece of identification information is used to identify at least one tag, the at least one piece of identification information includes the second identification information, and the at least one tag includes the tag 1. That is, the request message may alternatively indicate that the first operation indicated by the operation type is requested to be performed on a tag identified by each of the at least one piece of identification information.

Optionally, the request message may include first identification information of the AF. For example, the AF may be the AF in FIG. 1, and the first identification information of the AF may be identification information of the AF. In a possible implementation, when the request message includes the first identification information of the AF, the request message may request to perform the first operation on a tag belonging to the AF. For example, when the request message includes the first identification information of the AF, but does not include the second identification information of the tag 1, the request message may indicate to perform the first operation on the tag belonging to the AF. In a possible implementation, the tag belonging to the AF may be understood as a tag managed by the AF or a tag associated with the first identification information of the AF.

Optionally, the request message may further include first security policy information. For descriptions of the first security policy information, refer to the descriptions of the communication method 400.

Optionally, before S501, the tag 1 may be initialized. The initializing the tag 1 may be understood as writing at least one of the third identification information, a security key, or service data of the tag 1 into the tag 1.

Optionally, the method 500 may further include: S502. The TMF generates second information corresponding to the first operation.

Optionally, if the request message includes the operation type, S502 includes: The TMF generates the second information corresponding to the first operation indicated by the operation type. In a possible implementation, if the first operation indicated by the operation type included in the request message is a read operation, a write operation, a disable operation, a deactivate operation, a positioning operation, a locking operation, an operation of obtaining tag information, an operation of message exchange with a tag, or an operation of sending payload to a tag, an alternative manner to S502 is: The TMF generates second information. The second information corresponds to the first operation indicated by the operation type. For example, when the operation type indicates a read operation, the second information may include information corresponding to the read operation, for example, information about a storage area from which reading is to be performed or a length of information to be read. For example, when the operation type indicates a write operation, the second information may include information corresponding to the write operation, for example, information about a storage area into which writing is to be performed, a length of information to be written, or data to be written.

In some embodiments, S502 may not be performed, and the second information in S503 may be replaced with the operation type.

In some possible implementations, the second information may indicate the terminal device to perform the first operation. Optionally, the second information may be a NAS message or NAS signaling. A format and a naming manner of the second information are not limited in this application. Optionally, in S503, the TMF sends the second information and third information to the AMF. The third information indicates the AMF to send the second information to the tag 1 after performing security authentication of the tag 1.

Optionally, the third information may alternatively not be sent in S503. That is, if the TMF sends the second information to the AMF, it indicates that the AMF needs to send the second information to the tag 1 after performing security authentication of the tag 1. In other words, that the TMF sends the second information to the AMF may implicitly indicate the AMF to send the second information to the tag 1 after performing security authentication of the tag 1. For example, the TMF sends a specific message to the AMF, the specific message includes the second information, and a type of the specific message implicitly indicates the AMF to send the second information to the tag 1 after performing security authentication of the tag 1.

Optionally, the TMF may generate an event identifier (event ID) based on the request message in S501, and then send at least one of the event identifier or the second information or the third information in S503 to the AMF. The event identifier corresponds to the second information and/or the third information in S503, indicating that the second information and/or the third information in S503 corresponds to (or understood as being associated or bound with) the event identifier.

Optionally, when the first operation may be a read operation, a write operation, a disable operation, a locking operation, a positioning operation, an operation of obtaining tag information, an operation of message exchange with a tag, or an operation of sending payload to a tag, S503 may be performed. When the first operation is an inventory operation, S503 may not be performed.

S504. The TMF sends first information to the AMF, and the AMF receives the first information from the TMF. The first information indicates the AMF to perform security authentication of the tag 1 after random access of the tag 1 succeeds.

Optionally, when the request message in S501 includes the first security policy information, the first information in S504 may also include the first security policy information, and the first security policy information indicates the AMF to perform security authentication of the tag 1 after random access of the tag 1 succeeds. Optionally, the first security policy information includes an authentication manner. If the authentication manner is two-way authentication, and one-way authentication performed by a network or the requester (for example, the AF or a domain in which the AF is located) on the tag 1, or one-way authentication performed by the tag 1 on the network or the requester (for example, the AF or the domain in which the AF is located), it indicates the AMF to perform security authentication of the tag 1 after random access of the tag 1 succeeds. If the authentication manner is no authentication, the communication method 500 may not include S509. In a possible implementation, the domain in which the AF is located may be understood as a device that is in the domain in which the AF is located and that is responsible for performing security authentication, for example, an authentication device or an AAA server. In a possible implementation, that the AMF performs security authentication of the tag 1 may be understood as that the AMF participates in, initiates, or triggers security authentication of the tag 1. The authentication may not be performed by the AMF, but is performed by another device that has a security authentication functionality, a server, or the like.

Optionally, when the request message in S501 includes the first identification information of the AF but does not include the first security policy information, the TMF may obtain the first security policy information in Manner 2 in S410. In this case, the first information in S504 may include the obtained first security policy information, and the first security policy information indicates the AMF to perform security authentication of the tag 1 after random access of the tag 1 succeeds.

Optionally, when the request message in S501 includes the second identification information of the tag 1 but does not include the first security policy information, the TMF may obtain the first security policy information in Manner 3 in S410. In this case, the first information in S504 may include the obtained first security policy information, and the first security policy information indicates the AMF to perform security authentication of the tag 1 after random access of the tag 1 succeeds.

Optionally, when the request message in S501 includes the first identification information of the AF and the second identification information of the tag 1 but does not include the first security policy information, the TMF may obtain the first security policy information in Manner 2 or Manner 3 in S410. In this case, the first information in S504 may include the obtained first security policy information, and the first security policy information indicates the AMF to perform security authentication of the tag 1 after random access of the tag 1 succeeds.

Optionally, when the request message in S501 includes the second identification information of the tag 1, the TMF may send the second identification information to the AMF. Optionally, the first information in S504 may include the second identification information, or the TMF may send the second identification information to the AMF via other information independent of the first information. This is not limited in embodiments of this application.

Optionally, the TMF may generate an event identifier (event ID) based on the request message in S501, and then send the event identifier and/or the first information in S504 to the AMF. The event identifier corresponds to (or may be understood as being associated or bound with) the first information in S504. Optionally, when both S503 and S504 are performed, the TMF may send at least one of the second information, the third information, the first information, and the event identifier in a same message. In this case, the event identifier may correspond to (or may be understood as being associated or bound with) at least one of the second information, the third information, or the first information.

It should be noted that there is no limitation on a sequence between S504 and S503, and S504 may be performed before, after, or simultaneously with S503.

Optionally, the method 500 may further include: S505. The TMF sends a random access indication to the AMF, and the AMF receives the random access indication from the TMF. The random access indication indicates to perform random access for the tag 1.

Optionally, that the random access indication indicates to perform random access for the tag 1 may be replaced with that the random access indication indicates to allow random access of the tag 1, or indicates the RAN to perform a random access procedure of the tag 1, or indicates the RAN to initiate random access of the tag 1, or indicates that random access performed by the RAN may include random access of the tag 1.

Optionally, after S505, the AMF does not parse the random access indication in S505, but directly forwards the random access indication to the RAN in S506. Optionally, S505 includes: The TMF sends an N2 container to the AMF. The N2 container may include the random access indication. In this case, the AMF does not parse the random access indication information in the N2 container.

Optionally, the TMF may send a first message to the AMF. The first message includes the random access indication. Optionally, the TMF may generate an event identifier (event ID) based on the request message in S501. Then, in S505, the TMF may send an N2 container to the AMF. The N2 container may include the random access indication and/or the event identifier, indicating that the random access indication corresponds to (or may be understood as being associated or bound with) the event identifier. Optionally, when both S503 and S505 are performed, the first message that may be sent by the TMF to the AMF includes at least one of the second information, the third information, or the N2 container, and the N2 container may include the random access indication and/or the event identifier. Optionally, when both S504 and S505 are performed, the first message that may be sent by the TMF to the AMF includes the N2 container, and the N2 container may include the random access indication and/or the event identifier. Optionally, when S503, S504, and S505 are all performed, the first message that may be sent by the TMF to the AMF includes at least one of the first information, the second information, the third information, or the N2 container, and the N2 container may include the random access indication and/or the event identifier. Optionally, the first message may be a service-based interface message.

Optionally, S505 includes: The TMF may send a first message to the AMF. The first message includes the random access indication and/or the second identification information of the tag 1, indicating to perform random access for the tag 1 identified by the second identification information. Optionally, the TMF may send an N2 container to the AMF. The N2 container may include the random access indication and/or the second identification information of the tag 1. Optionally, the TMF may generate an event identifier based on the request message in S501. S505 includes: The TMF may send an N2 container to the AMF. The N2 container may include at least one of the random access indication, the second identification information of the tag 1, or the event identifier. In this case, the event identifier corresponds to (or may be understood as being associated or bound with) the second identification information and/or the random access indication. Optionally, when both S503 and S505 are performed, the first message that may be sent by the TMF to the AMF includes at least one of the second information, the third information, or the N2 container, and the N2 container may include at least one of the random access indication, the second identification information of the tag 1, or the event identifier. Optionally, when both S504 and S505 are performed, the first message that may be sent by the TMF to the AMF may include the first information and/or the N2 container, and the N2 container may include at least one of the random access indication, the second identification information of the tag 1, or the event identifier. Optionally, when S503, S504, and S505 are all performed, the first message that may be sent by the TMF to the AMF includes at least one of the first information, the second information, the third information, or the N2 container, and the N2 container includes at least one of the random access indication, the second identification information of the tag 1, or the event identifier.

Optionally, the N2 container may include an identification information set (or mask information), and the identification information set may include the second identification information of the tag 1. For example, the identification information set may be indicated by mask information. For example, the second identification information of the tag 1 is 0124578888, and the mask information may be 012457, indicating a tag or a set of tags with an identifier including 012457, or a tag or a set of tags with an identifier starting with 012457.

Optionally, if the request message in S501 includes at least one piece of identification information, and each of the at least one piece of identification information is used to identify one tag, in S505, the TMF may send an N2 container to the AMF. The N2 container includes the random access indication and/or the at least one piece of identification information in S501, indicating to perform random access for the tag identified by the at least one piece of identification information. Optionally, the TMF may generate an event identifier based on the request message in S501. S505 may include: The TMF may send an N2 container to the AMF. The N2 container may include at least one of the random access indication, the at least one piece of identification information in S501, or the event identifier. In this case, the event identifier corresponds to (or may be understood as being associated or bound with) the at least one piece of identification information in S501 and/or the random access indication. Optionally, when both S503 and S505 are performed, the first message that may be sent by the TMF to the AMF includes at least one of the second information, the third information, or the N2 container, and the N2 container includes at least one of the at least one piece of identification information in S501, the random access indication, or the event identifier. Optionally, when both S504 and S505 are performed, the first message that may be sent by the TMF to the AMF may include the first information and/or the N2 container, and the N2 container includes at least one of the at least one piece of identification information in S501, the random access indication, or the event identifier. Optionally, when S503, S504, and S505 are all performed, the first message that may be sent by the TMF to the AMF includes at least one of the first information, the second information, the third information, or the N2 container, and the N2 container includes at least one of the at least one piece of identification information in S501, the random access indication, or the event identifier.

Optionally, the first message may include an identification information set, the identification information set may include the at least one piece of identification information, and the at least one piece of identification information includes the first identification information of the tag 1.

Optionally, when the first security policy information includes a security parameter, and the security parameter includes a random number and/or a token value, in S505, the TMF may send the random access indication and the security parameter to the AMF. Optionally, the N2 container that may be sent by the TMF to the AMF may further include the random access indication and the security parameter.

Optionally, when the TMF sends the N2 container to the AMF, the AMF may forward the N2 container to the RAN in S506. That is, the N2 container in information sent by the TMF to the AMF is sent by the TMF to the RAN, and the AMF is responsible for forwarding the N2 container. The N2 container does not include the second information or the third information in S503, nor includes the first information in S504. In other words, the second information and the third information in S503 and the first information in S504 are sent to the AMF, and the AMF needs to parse the information.

It should be noted that at least two of steps S503, S504, and S505 may be performed in one message. For example, at least two of the second information, the third information, the first information, and the random access indication information may be sent in one message. Alternatively, at least two of steps S503, S504, and S505 may be performed in different messages. For example, the second information and the third information are sent in one message, and the first information and the random access indication information are sent in another message. When at least two of S503, S504, and S505 are sent in different messages, a sequence between the at least two of S503, S504, and S505 is not limited.

In some possible implementations, the second information may indicate the terminal device to perform the first operation. Optionally, the second information may be a non-access stratum (NAS) message or NAS signaling. A format and a naming manner of the second information are not limited in this application. S506. The AMF sends the random access indication to the RAN, and the RAN receives the random access indication.

Optionally, after receiving the random access indication in S505, the AMF may forward the random access indication to the RAN in S506.

Optionally, S505 includes: The TMF sends an N2 container to the AMF. In this case, in S506, the AMF may forward the N2 container to the RAN without parsing the random access indication information in the N2 container. Optionally, with reference to the descriptions in S505, optionally, the N2 container may include the random access indication. Optionally, the N2 container may alternatively include the random access indication and/or the event identifier. Optionally, the N2 container may include the random access indication and/or the second identification information of the tag 1. The N2 container may include at least one of the random access indication, the second identification information of the tag 1, or the event identifier. Optionally, the N2 container may include the random access indication and/or the at least one piece of identification information in S501. Optionally, the N2 container may include at least one of the random access indication, the at least one piece of identification information in S501, or the event identifier.

Optionally, in S505, the first message that may be sent by the TMF to the AMF may further include a security parameter. When the security parameter includes a random number and/or a token value, in S506, the AMF may further send the security parameter to the RAN. Optionally, when the N2 container includes the random access indication and the security parameter, the N2 container forwarded by the AMF to the RAN in S506 may also include the random access indication and the security parameter.

In other words, the N2 container in S505 and S506 may include at least one of the random access indication, the second identification information, the event identifier, or the security parameter, and the event identifier may correspond to (or may be understood as being associated or bound with) at least one of the random access indication, the second identification information, or the security parameter. Alternatively, the N2 container may include at least one of the random access indication, the at least one piece of identification information, the event identifier, or the security parameter, and the event identifier may correspond to (or may be understood as being associated or bound with) at least one of the random access indication, the at least one piece of identification information, or the security parameter. Content included in the N2 container is not limited in embodiments of this application.

It may be understood that, if S505 is performed, S506 may be performed. If S505 is not performed, S506 may not be performed.

S507. The RAN performs random access of the tag 1 based on the random access indication.

Optionally, if the N2 container received by the RAN from the AMF in S506 includes the random access indication and the second identification information, the RAN initiates a random access procedure based on the random access indication. In a possible implementation, the RAN generates a random access instruction based on the random access indication, and broadcasts the random access instruction (for example, a select command). The random access instruction may include the second identification information or mask information indicating the second identification information. The tag 1 may listen to the random access instruction. The RAN may continue to broadcast a query (query) instruction. If the second identification information in the random access instruction is identification information of the tag 1 or the mask information in the random access instruction includes identification information of the tag 1, the tag 1 receives the query (query) command and feeds back a random number to the RAN. For example, the random number is an RN 16. If the second identification information in the random access instruction is not identification information of the tag 1, the tag 1 does not perform any action. After the RAN receives the random number, the RAN may send an acknowledgment (acknowledgment, ACK). The ACK may include the random number received by the RAN. After the random number included in the ACK received by the tag 1 is the random number fed back by the tag 1, the tag 1 may perform S508. After the tag 1 performs S508, it indicates that random access is completed.

Optionally, if the N2 container received by the RAN from the AMF in S506 includes the random access indication and the at least one piece of identification information, the RAN initiates a random access procedure based on the random access indication. In a possible implementation, the RAN generates a random access instruction (for example, a select command) based on the random access indication, and broadcasts the random access instruction. The random access instruction may include the at least one piece of identification information or mask information indicating the at least one piece of identification information. The tag 1 may listen to the random access instruction. The RAN may continue to broadcast a query (query) instruction. If the at least one piece of identification information in the random access instruction includes the second identification information of the tag 1 or the at least one piece of identification information indicated by the mask information in the random access instruction includes the second identification information of the tag 1, the tag 1 receives the query (query) command and feeds back a random number to the RAN. For example, the random number is an RN 16. If the at least one piece of identification information in the random access instruction does not include the second identification information of the tag 1, or the at least one piece of identification information indicated by the mask information in the random access instruction does not include the second identification information of the tag 1, the tag 1 does not perform any action. After the RAN receives the random number, the RAN may send an acknowledgment (acknowledgment, ACK). The ACK may include the random number received by the RAN. After the random number included in the ACK received by the tag 1 is the random number fed back by the tag 1, the tag 1 may perform S508. After the tag 1 performs S508, it indicates that random access is completed.

Optionally, the random access indication may specifically indicate to perform random access of a terminal device (for example, the tag 1) in a first random access mode. For example, the first random access mode may be continuously performing random access. For example, after completing a random access procedure of a terminal device (for example, the tag 1), the RAN may continue to perform a random access procedure of a next terminal device (for example, a tag 2) without waiting for random access continued indication information of a core network device (for example, the AMF or the TMF). Alternatively, the random access indication may specifically indicate to perform random access of a terminal device (for example, the tag) in a second random access mode. For example, after completing a random access procedure of a terminal device (for example, the tag 1), the RAN needs to wait or continue to perform random access of another terminal device (for example, the tag 2) based on an indication of a core network device (for example, the AMF or the TMF).

Optionally, the RAN may be a reader (reader). The reader interacts with the tag by using a radio frequency signal or a radio signal. The reader may be replaced with another noun. A name of a device that performs random access of the tag 1 is not limited in embodiments of this application, and any device that has a functionality of performing random access of the tag 1 may be referred to as a reader.

Optionally, the N2 container that may be sent by the AMF to the RAN in S506 includes a security parameter. When the security parameter includes a random number and/or a token value, in S507, the RAN may broadcast the random access indication and the security parameter to the tag 1, and the tag 1 accesses the RAN based on the random access indication and the security parameter.

It may be understood that, if S506 is performed, S507 may be performed. If S506 is not performed, S507 may not be performed.

S508. The tag 1 sends a registration request message to the AMF, and the AMF receives the registration request message sent by the tag 1.

Optionally, after the AMF receives the registration request message sent by the tag 1, it indicates that random access of the tag 1 succeeds, and S509 may be performed.

Optionally, the registration request message may include the third identification information of the tag 1. Optionally, if the first operation is an inventory operation, after obtaining the third identification information in the registration request message, the AMF sends the third identification information to the AF via the TMF, indicating that the inventory ends. Alternatively, after obtaining the third identification information in the registration request message and performing S509, when determining that the tag 1 is secure, the AMF sends the third identification information to the AF via the TMF. The method 500 ends. If the first operation is a read operation, a write operation, a disable operation, a locking operation, or a positioning operation, S509 may continue to be performed. After S509 is performed, a subsequent process of the method 500 continues to be performed.

Optionally, the registration request message may further include terminal type information of the tag 1, and the terminal type information indicates that a terminal type of the tag 1 is a first terminal type. For example, the first terminal type is an internet-of-things terminal device. For another example, the first terminal type is an internet-of-things device obtaining ambient energy. For another example, the first terminal type is a passive internet-of-things terminal device, a semi-passive internet-of-things terminal device, a semi-active internet-of-things terminal device, or an active internet-of-things terminal device. For still another example, the first terminal type is a passive terminal device that cannot store energy, a passive terminal device that can store energy, a semi-passive terminal device that cannot store energy, or a semi-passive terminal device that can store energy.

Optionally, the registration request message is used to access or register with the second core network device, or is used to access or register with the network or the like. Optionally, the registration request (registration request) message may be replaced with a request message or an access request message. The request message may be replaced with a non-access stratum (non-access stratum, NAS) request message, and the access request message may be replaced with a NAS access request message.

S509. The AMF performs security authentication of the tag 1 based on the first information.

Optionally, the registration request message in S507 may include the third identification information of the tag 1. In this case, S508 includes: If UE identified by the third identification information is the tag 1 identified by the second identification information, the AMF performs security authentication of the tag 1. Otherwise, the AMF does not perform security authentication of the tag 1, or rejects registration of the tag 1 or rejects access of the tag 1. To be specific, if the TMF indicates the AMF to perform security authentication of the tag 1 identified by the second identification information, and if the third identification information from the registration request message also identifies the tag 1, the AMF may perform security authentication of the tag 1. If a tag identified by the third identification information in the registration request message is not the tag 1, and the AMF determines that the tag identified by the third identification information in the registration request message is not the tag 1 indicated by the TMF, the AMF does not perform security authentication of the tag 1, or rejects registration of the tag 1 or rejects access of the tag. In a possible implementation, the third identification information of the tag 1 may be the same as the second identification information of the t tag 1.

Optionally, if the registration request message further includes the terminal type information of the tag 1, and the terminal type information indicates that the terminal type of the tag 1 is the first terminal type, for example, the first terminal type is an internet-of-things terminal device (for example, a passive internet-of-things terminal device), before S509, the method 500 further includes: The AMF determines, based on the first terminal type of the tag 1, that security authentication of the tag 1 needs to be performed based on the first information in S504. In other words, if the first terminal type is not an internet-of-things terminal device (for example, not a passive internet-of-things terminal device), S509 may not be performed, or a security authentication procedure of the tag 1 may not need to be performed in the manner of S509. For example, the AMF may perform the security authentication procedure of the tag 1 according to a security authentication solution in TS33.501, rather than based on the first information. When the first terminal type of the tag 1 is an internet-of-things terminal device, the AMF may perform S509.

Optionally, if the tag 1 receives, in S507, the security parameter broadcast by the RAN, that the AMF performs security authentication of the tag 1 based on the first information in S509 may include: The AMF performs security authentication of the tag 1 based on the first information and the security parameter received by the tag 1. For example, the security parameter may include a random number and a security key. In this case, the tag 1 may generate a check value by using the random number and the security key, and send the generated check value to the AMF. The AMF generates a check value based on the random number and the security key, and determines whether the check value from the tag 1 is the same as the check value generated by the AMF. If the two are the same, it indicates that authentication performed by the AMF on the tag 1 succeeds. For another example, the AMF may send the random number and the security key to the tag 1 via the RAN. The tag 1 may generate a check value by using the random number and the security key, and send the generated check value to the AMF. The AMF may store the random number and the security key. The AMF decrypts the check value from the tag 1 based on the sent security key, to obtain a decrypted random number. The AMF determines whether the decrypted check value is the same as the random number sent by the AMF. If the two are the same, it indicates that authentication performed by the AMF on the tag 1 succeeds.

Optionally, if the authentication performed by the AMF on the tag 1 in S509 succeeds, it indicates that the tag 1 is a secure, trusted, or authorized tag, S510 may be performed. If the authentication performed by the AMF on the tag 1 in S509 fails, it indicates that the tag 1 is untrusted or insecure. Therefore, S510 is not performed, or registration of the tag 1 is rejected, or the access request of the tag 1 is rejected. Optionally, if the authentication performed by the AMF on the tag 1 in S509 fails, and the first operation is an inventory operation, even if the registration request message includes the third identification information of the tag 1, the AMF does not send the third identification information to the AF (via the TMF). In other words, because the tag 1 is untrusted UE, the AMF does not send, to the AF (via the TMF), the third identification information of the tag 1 obtained through inventory.

In a possible implementation, the authentication process may alternatively be performed by another device (for example, another core network device or an authentication server). For example, the another device may include at least one of the AMF, the TMF, an AUSF, a UDM, a UDR, the NEF, an NSSAAF, the AF, or an AAA server. When the authentication process is performed by the another device, the AMF may initiate an authentication procedure, and forward security authentication signaling.

S510. The AMF sends the second information to the tag 1, and the tag 1 receives the second information from the AMF.

Optionally, S510 includes: The AMF sends a registration accept message (registration accept) to the tag 1, and the tag 1 receives the registration accept message from the AMF. The registration accept message may include the second information. In other words, the AMF may put, based on the third information, the second information in S503 into the registration accept message sent to the tag 1, thereby avoiding overheads caused when the AMF needs to use dedicated signaling to send the second information after S509. For example, if the first operation is a read operation, a write operation, a disable operation, a locking operation, or a positioning operation, the registration accept message in S510 may include the second information.

Optionally, the registration accept message may alternatively not include the second information. The AMF may send the registration accept message and the second information to the tag 1 in one message, or may send the registration accept message and the second information in different messages. Optionally, the registration accept message may alternatively not include the second information. After the tag 1 receives the registration accept message, the tag 1 may send the third identification information of the tag 1 to the AMF, and after receiving the third identification information of the tag 1, the AMF may send the second information to the tag 1. For example, if the first operation is a read operation, a write operation, a disable operation, a locking operation, or a positioning operation, after receiving the third identification information of the tag 1, the AMF may send the second information to the tag 1.

Optionally, the registration accept message may further include tracking area (tracking area, TA) information. For example, the tracking area information may include one or more tracking area identities or cell identities.

Optionally, if the AMF determines, in S509, that the tag 1 is a secure, authorized, or trusted tag, S510 is performed. Otherwise, S510 is not performed.

S511. The tag 1 sends data corresponding to the first operation to the RAN, and the RAN receives the data corresponding to the first operation from the tag 1.

Optionally, if the first operation is a read operation, in S511, the data that corresponds to the first operation and that is sent by the tag 1 to the RAN may be data in a storage area of the tag 1.

Optionally, if the first operation is a write operation, the second information that corresponds to the first operation and that is generated by the TMF in S502 may include data to be written into the tag 1, and in S511, the data that corresponds to the first operation and that is sent by the tag 1 to the RAN may be response information sent by the tag 1 to the RAN for the write operation.

Optionally, if the first operation is a disable operation, in S511, the data that corresponds to the first operation and that is sent by the tag 1 to the RAN may be response information sent by the tag 1 to the RAN for the disable operation.

Optionally, if the first operation is a locking operation, in S511, the data that corresponds to the first operation and that is sent by the tag 1 to the RAN may be response information sent by the tag 1 to the RAN for the locking operation.

Optionally, if the first operation is a positioning operation, in S511, the data that corresponds to the first operation and that is sent by the tag 1 to the RAN may be location information of the tag 1.

Optionally, in S511, the tag 1 may send the data corresponding to the first operation and the third identification information of the tag 1 to the RAN, indicating that the data corresponding to the first operation on the tag 1 identified by the third identification information is sent.

Optionally, the tag 1 may send an uplink non-access stratum (uplink non-access stratum, UL NAS) message to the RAN. The UL NAS message includes the data corresponding to the first operation, or the UL NAS message includes the data corresponding to the first operation and the third identification information of the tag 1. The UL NAS message is a message sent by the RAN to the AMF, and the RAN may not parse the UL NAS message.

S512. The RAN sends the data corresponding to the first operation to the AMF, and the AMF receives the data corresponding to the first operation from the RAN.

Optionally, if the tag 1 sends the data corresponding to the first operation and the third identification information of the tag 1 to the RAN in S511, in S512, the RAN sends the data corresponding to the first operation and the third identification information of the tag 1 to the AMF.

Optionally, if the tag 1 sends the UL NAS message to the RAN in S511, the RAN sends the UL NAS message to the AMF. The UL NAS message includes the data corresponding to the first operation, or includes the data corresponding to the first operation and the third identification information of the tag 1.

Optionally, if the N2 container received by the RAN from the AMF in S506 includes the event identifier, in S512, the RAN may send the event identifier and the data corresponding to the first operation to the AMF, and the AMF receives the event identifier and the data corresponding to the first operation, indicating that the data corresponding to the first operation is data corresponding to (or may be understood as being associated or bound with) the event identifier, or in other words, the data corresponding to the first operation is data returned for the event identifier. Optionally, when the tag 1 sends the data corresponding to the first operation and the third identification information to the RAN, the RAN may alternatively send the third identification information of the tag 1, the event identifier, and the data corresponding to the first operation to the AMF, and the AMF receives the event identifier, the third identification information of the tag 1, and the data corresponding to the first operation, indicating that the data corresponding to the first operation on the tag 1 identified by the third identification information corresponds to (or may be understood as being associated or bound with) the event identifier. Optionally, the UL NAS message sent by the tag 1 to the RAN in S511 may include the third identification information of the tag 1, or include the third identification information of the tag 1 and the data corresponding to the first operation. In this case, the RAN sends a second message to the AMF in S512. The second message includes the event identifier and the UL NAS message, indicating that the UL NAS message is feedback for the event identifier in S512.

S513. The AMF sends the data corresponding to the first operation to the TMF, and the TMF receives the data corresponding to the first operation from the AMF.

Optionally, if the AMF receives the data corresponding to the first operation and the event identifier from the RAN in S512, the AMF sends the data corresponding to the first operation and the event identifier to the TMF in S513.

Optionally, if the AMF receives the third identification information of the tag 1 and the data corresponding to the first operation from the RAN in S512, the AMF sends the third identification information of the tag 1 and the data corresponding to the first operation to the TMF in S513.

Optionally, if the AMF receives the third identification information, the data corresponding to the first operation, and the event identifier that are sent from the RAN in S512, the AMF sends the third identification information of the tag 1, and the data corresponding to the first operation, and the event identifier to the TMF in S513.

In some embodiments, if the request message in S501 includes at least one piece of identification information, and a tag identified by each of the at least one piece of identification information corresponds to the foregoing execution process, after the corresponding execution process is completed for each tag identified by each of the at least one piece of identification information, the TMF may indicate the AMF to stop performing random access. Therefore, S514a may be performed. When the foregoing security authentication is not completed for tags identified by some of the at least one piece of identification information, the TMF may continue to indicate the AMF to perform random access of a next tag. Therefore, S514b may be performed.

It should be noted that, the RAN forwards the data corresponding to the first operation to the AMF in S512, and the AMF forwards the data corresponding to the first operation to the TMF in S513. That is, the RAN in S512 and the AMF in S513 may be responsible for only forwarding the data corresponding to the first operation, rather than parsing the data corresponding to the first operation, and the TMF parses the data corresponding to the first operation. Therefore, it is equivalent to that the TMF is a network element responsible for performing service data transmission of the tag 1.

S514a. The TMF sends fifth information to the AMF, and the AMF receives the fifth information from the TMF. The fifth information indicates the AMF to stop performing security authentication of the tag 1.

Optionally, if the TMF receives the event identifier in S513, the TMF may send the fifth information and the event identifier to the AMF in S514a.

Optionally, if the TMF sends the second identification information of the tag 1 and the random access indication to the RAN in S505, S514a may include: The TMF sends the second identification information of the tag 1 and the fifth information to the AMF.

S515a is performed after S514a.

S514b. The TMF sends, to the AMF, a random access indication for continuing to perform random access, and the AMF receives, from the TMF, the random access indication for continuing to perform random access.

Optionally, in S514b, the TMF may send, to the AMF, the random access indication for continuing to perform random access and fourth identification information of the tag 2, to indicate to continue to perform random access of the tag 2. Optionally, the at least one identifier included in the request message in S501 includes the fourth identification information.

Optionally, in S514b, the TMF may send, to the AMF, the event identifier generated based on the request message in S501 and the random access indication for continuing to perform random access, indicating that the random access indication corresponds to (or may be understood as being associated or bound with) the event identifier.

Optionally, in S514b, the TMF may send, to the AMF, the fourth identification information of the tag 2 and the random access indication for continuing to perform random access, indicating to continue to perform random access of the tag 2. Optionally, the TMF may send another N2 container to the AMF, and the another N2 container includes the fourth identification information and the random access continued indication. Optionally, the TMF may send, to the AMF, the event identifier generated based on the request message in S501, the fourth identification information of the tag 2, and the random access indication for continuing to perform random access, indicating to continue to perform random access of the tag 2 corresponding to (or may be understood as being associated or bound with) the event identifier. Optionally, the at least one identifier included in the request message in S501 includes the fourth identification information.

S515a. The AMF sends sixth information to the RAN, and the RAN receives the sixth information from the AMF. The sixth information indicates the RAN to stop performing random access of the tag 1.

Optionally, if the TMF sends the second identification information and the fifth information to the AMF in S514a, S515a may include: The AMF sends the second identification information of the tag 1 and the sixth information to the RAN, and the RAN stops random access of the tag 1 identified by the second identification information.

Optionally, if the TMF sends the fifth information and the event identifier to the AMF in S514a, and the N2 container in S506 includes the random access indication, the at least one piece of identification information, and the event identifier, in S515a, the AMF may send the sixth information and the event identifier to the RAN, and the RAN stops, based on the sixth information, random access of the UE identified by the at least one piece of identification information bound with the event identifier.

Optionally, if the TMF sends the fifth information and the event identifier to the AMF in S514a, and the N2 container in S506 includes the random access indication and the second identification information of the tag 1, in S515a, the AMF may send the sixth information and the event identifier to the RAN, and the RAN stops, based on the sixth information, random access of the tag 1 identified by the second identification information bound with the event identifier.

S515b. The AMF sends, to the RAN, the random access indication for continuing to perform random access, and the RAN receives, from the AMF, the random access indication for continuing to perform random access.

Optionally, if the TMF sends the random access indication for continuing to perform random access and the fourth identification information of the tag 2 to the AMF in S514b, the AMF sends the random access indication for continuing to perform random access and the fourth identification information of the tag 2 to the RAN in S515b.

Optionally, if the TMF sends, to the AMF in S514b, the event identifier generated based on the request message in S501 and the random access indication for continuing to perform random access, the AMF sends, to the RAN in S515b, the event identifier and the random access indication for continuing to perform random access.

Optionally, if the TMF sends, to the AMF in S514b, the event identifier generated based on the request message in S501, the fourth identification information of the tag 2, and the random access indication for continuing to perform random access, the AMF may send, to the RAN in S515b, the event identifier generated based on the request message in S501, the fourth identification information of the tag 2, and the random access indication for continuing to perform random access.

After S515b, the RAN continues to perform the random access indication of the tag 2, and then continues to perform steps similar to those after S507.

S516. The TMF may send the data corresponding to the first operation in S512 to the AF via the NEF, and the AF receives, from the TMF via the NEF, the data corresponding to the first operation.

Alternatively, S516 may be: The TMF may send the data corresponding to the first operation in S512 to the AF, and the AF receives, from the TMF, the data corresponding to the first operation.

Optionally, S516 may be performed after S513. There is no limitation on a sequence between S516 and S514a, S514b, S515a, or S515b. S516 may be performed after, before, or simultaneously with S514a, S514b, S515a, or S515b.

Optionally, the TMF may send the data corresponding to the first operation in S512 to the AF via the NEF.

Optionally, when the request message in S501 includes at least one piece of identification information, a tag identified by each of the at least one piece of identification information may correspond to the foregoing process of performing security authentication and data transmission. After receiving data corresponding to a first operation on the tag identified by each of the at least one piece of identification information, the TMF may send the data together to the AF, or may separately send the data to the AF. This is not limited in embodiments of this application.

It should be noted that the communication method 500 may include more or fewer steps, and the steps shown in FIG. 5 should not constitute any limitation on this embodiment of this application. For example, S514a, S514b, S515a, and S515b in the communication method 500 are optional steps. For another example, the communication method 500 may not include S502.

In the communication method 500, there may be a communication interface between the AMF and the RAN, there may be a communication interface between the TMF and the AMF, and there may be no communication interface between the TMF and the RAN. After the TMF receives the request message from the AF, the TMF may send the first information to the AMF to indicate the AMF to perform security authentication of the tag 1 after random access of the tag 1 succeeds, and the AMF performs security authentication of the tag 1 after random access of the tag 1 succeeds. In this way, the AMF performs security authentication of the tag 1, and the TMF performs service data transmission of the tag 1. Therefore, a function for service data transmission of the tag 1 does not need to be integrated into the AMF, or a function for security authentication of the tag 1 does not need to be integrated into the TMF, thereby reducing costs. In addition, the AMF may generate the second information corresponding to the first operation, and send the second information to the tag 1 in the registration accept message after random access of the tag 1 succeeds, thereby avoiding overheads caused by dedicated signaling required to send the second information.

In some possible implementations, the second information may indicate the terminal device to perform the first operation. Optionally, the second information may be a non-access stratum (NAS) message or NAS signaling. A format and a naming manner of the second information are not limited in this application.

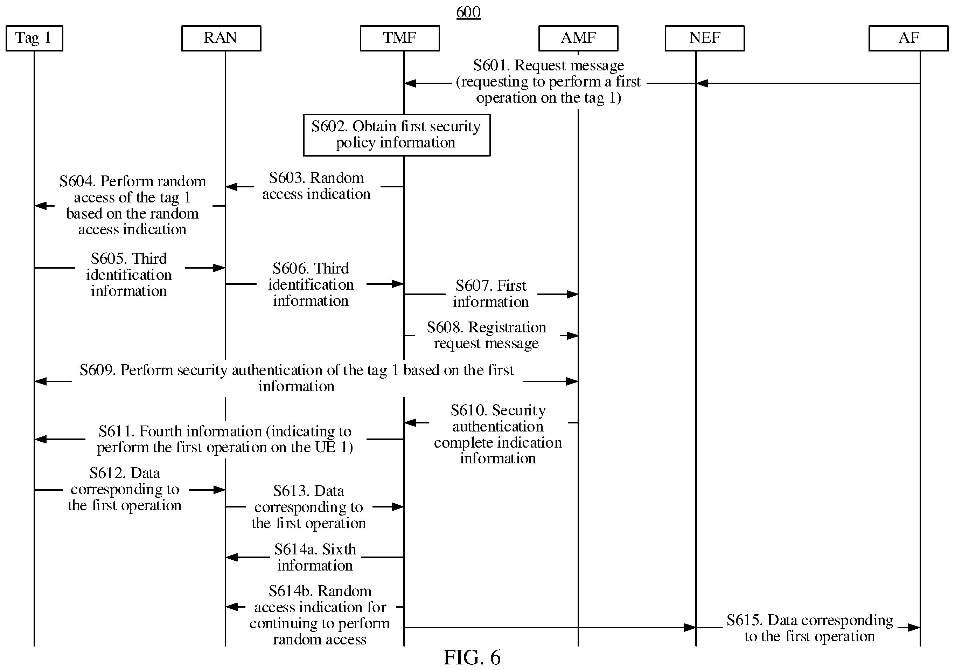

The following describes, with reference to FIG. 6, a communication method 600 provided in an embodiment of this application in the architecture shown in FIG. 2. In the communication method 600, an example in which a first core network device is a TMF, a second core network device is an AMF, a requester is an AF, an access network device is a RAN, and a first terminal device is a tag 1 (tag 1) is used for description, but this embodiment of this application is not limited thereto. As shown in FIG. 6, the communication method 600 includes the following steps.

S601 is the same as S501.

S602. The TMF obtains first security policy information.

For a manner in which the TMF obtains the first security policy information, refer to the manners in which the first core network device obtains the first security policy information in the method 400.

S603. The TMF sends a random access indication to the RAN, and the RAN receives the random access indication from the TMF. The random access indication indicates to perform random access for the tag 1.

Optionally, that the random access indication indicates to perform random access for the tag 1 may be replaced with that the random access indication indicates to allow random access of the tag 1, or indicates the RAN to perform a random access procedure of the tag 1, or indicates the RAN to initiate random access of the tag 1, or indicates that random access performed by the RAN may include random access of the tag 1.

Optionally, the TMF may generate an event identifier based on the request message in S601. In S603, the TMF may send the random access indication and/or the event identifier to the RAN. In this case, the event identifier corresponds to (or may be understood as being associated or bound with) the random access indication.

Optionally, the TMF may alternatively send second identification information of the tag 1 and/or the random access indication to the RAN, indicating to perform random access for the tag 1 identified by the second identification information. Optionally, the TMF may generate an event identifier based on the request message in S601. In S603, the TMF may send at least one of the random access indication, the event identifier, or the second identification information to the RAN. In this case, the event identifier corresponds to (or may be understood as being associated or bound with) the second identification information and/or the random access indication. Optionally, in some embodiments, there may be no event identifier. In this case, in S603, the TMF may send, to the RAN, the random access indication, or the random access indication and/or the second identification information.

Optionally, if the request message in S602 further includes at least one piece of identification information, in S603, the TMF may send the at least one piece of identification information and/or the random access indication to the RAN, indicating to perform random access for UE identified by each of the at least one piece of identification information. Optionally, the TMF may generate an event identifier based on the request message in S601. In S603, the TMF may send at least one of the event identifier, the random access indication, or the at least one piece of identification information to the RAN. In this case, the event identifier corresponds to (or may be understood as being associated or bound with) the at least one piece of identification information and/or the random access indication. Optionally, in some embodiments, there may be no event identifier. In this case, in S603, the TMF may send, to the RAN, the random access indication, or the random access indication and/or the at least one piece of identification information.

S604 is the same as S507.

S605. The tag 1 sends third identification information to the RAN, and the RAN receives the third identification information from the tag 1.

Optionally, S605 includes: The tag 1 sends the third identification information via a registration request message. For example, the tag 1 sends the registration request message to the RAN, and the RAN receives the registration request message from the tag 1. The registration request message includes the third identification information.

Optionally, the third identification information of the tag 1 may be the same as the second identification information of the tag 1.

Optionally, the registration request message may further include terminal type information of the tag 1, and the terminal type information indicates that a terminal type of the tag 1 is a first terminal type. For example, the first terminal type is an internet-of-things terminal device. For another example, the first terminal type is an internet-of-things device (ambient IoT device/tag) obtaining ambient energy. For another example, the first terminal type is a passive internet-of-things terminal device, a semi-passive internet-of-things terminal device, a semi-active internet-of-things terminal device, or an active internet-of-things terminal device. For still another example, the first terminal type is a passive terminal device that cannot store energy, a passive terminal device that can store energy, a semi-passive terminal device that cannot store energy, or a semi-passive terminal device that can store energy.

Optionally, the registration request message is used to access or register with a core network or the second core network device, or is used to access or register with a network or the like. Optionally, the registration request (registration request) message may be replaced with a request message or an access request message. The request message may be replaced with a non-access stratum (non-access stratum, NAS) request message, and the access request message may be replaced with a NAS access request message.

S606. The RAN sends the third identification information to the TMF, and the TMF receives the third identification information from the RAN.

Optionally, if the tag 1 sends the registration request message to the RAN in S605, and the registration request message may include the third identification information, S606 includes: The RAN sends the registration request message to the TMF, and the TMF receives the registration request message from the RAN. In other words, the RAN is responsible for forwarding the registration request message received from the tag 1 to the TMF.

Optionally, if the registration request message in S605 includes the terminal type of the tag 1, the registration request message sent by the RAN to the TMF in S606 may also include the terminal type of the tag 1, and the TMF obtains the terminal type of the tag 1 via the registration request message received from the RAN.

Optionally, if the TMF sends the event identifier to the RAN in S603, the RAN may send the registration request message and the event identifier to the TMF in S606, indicating that the registration request message is a registration request message corresponding to the event identifier.

After S606, it indicates that random access of the tag 1 succeeds, and S607 may be performed.

S607. The TMF sends first information to the AMF, and the AMF receives the first information sent by the TMF. The first information indicates the AMF to perform security authentication of the tag 1 after random access of the tag 1 succeeds.

Optionally, if S602 is performed, the first information may include the first security policy information, and the AMF receives the first security policy information from the TMF. The first security policy information indicates the AMF to perform security authentication of the tag 1 after random access of the tag 1 succeeds.

Optionally, if the request message in S601 includes first identification information of the AF, the TMF may further send the first identification information to the AMF, and the AMF may obtain the first security policy information based on the first identification information. For example, the AMF may obtain the first security policy information in Manner 2 in S420. In this case, the first information may not include the first security policy information.

For descriptions of the first security policy information, refer to the descriptions of the communication method 500.

S608. The TMF sends a registration request message to the AMF, and the AMF receives the registration request message from the TMF.

After the AMF receives the registration request message, it indicates that random access of the tag 1 succeeds. Therefore, the AMF may perform S609 based on the first information in S607.

Optionally, if the registration request message in S606 includes the third identification information of the tag 1, the registration request message sent by the TMF to the AMF in S608 also includes the third identification information of the tag 1.

Optionally, if the registration request message in S606 includes the terminal type of the tag 1, the registration request message sent by the TMF in S608 may also include the terminal type of the tag 1.

Optionally, if the RAN sends the registration request message and the event identifier to the TMF in S606, the TMF may also send the registration request message and the event identifier to the AMF in S608.

Optionally, S607 and S608 may be sent in a same message, or may be sent in different messages. This is not limited in this embodiment of this application. When S607 and S608 are sent in different messages, a sequence between S607 and S608 is not limited, and S607 may be performed before, after, or simultaneously with S608.

S609. The AMF performs security authentication of the tag 1 based on the first information.

Optionally, if the registration request message in S607 includes the third identification information of the tag 1, S609 includes: The AMF performs security authentication of the tag 1 identified by the third identification information. In other words, the AMF may determine, based on the third identification information in the registration request message, UE for which security authentication is to be performed.

Optionally, if the registration request message in S607 includes the terminal type information of the tag 1, and the terminal type information indicates that the terminal type of the tag 1 is the first terminal type, for example, the first terminal type is an internet-of-things terminal device (for example, a passive internet-of-things terminal device), before S609, the communication method 600 further includes: The AMF determines, based on the first terminal type of the tag 1, that security authentication of the tag 1 needs to be performed based on the first information in S607. In other words, if the first terminal type of the tag 1 is not an internet-of-things terminal device (for example, not a passive internet-of-things terminal device), S609 may not be performed. When the first terminal type of the tag 1 is an internet-of-things terminal device, the AMF may perform S609.

Optionally, if the tag 1 receives, in S604, a security parameter broadcast by the RAN, that the AMF performs security authentication of the tag 1 based on the first information in S609 may include: The AMF performs security authentication of the tag 1 based on the first information and the security parameter received by the tag 1. For example, the security parameter may include a random number and a security key. In this case, the tag 1 may perform an operation on the random number by using the security key to generate a check value, and send the check value to the AMF. The AMF performs an operation on the random number by using the security key to generate a check value. The AMF determines whether the check value from the tag 1 is the same as the check value generated by the AMF. If the two are the same, authentication performed by the AMF on the tag 1 succeeds. Alternatively, the AMF decrypts the check value from the tag 1 by using the security key to obtain a value, and determines whether the value is the same as the random number sent to the tag 1. If the two are the same, authentication performed by the AMF on the tag 1 succeeds.

In a possible implementation, the authentication process may alternatively be performed by another device (for example, another core network device or an authentication server). For example, the another device may include at least one of the AMF, the TMF, an AUSF, a UDM, a UDR, the NEF, an NSSAAF, the AF, or an AAA server. When the authentication process is performed by the another device, the AMF may initiate an authentication procedure, and forward security authentication signaling.

Optionally, if the authentication performed by the AMF on the tag 1 in S609 succeeds, it indicates that the tag 1 is a secure, trusted, or authorized tag, S610 may be performed. If the authentication performed by the AMF on the tag 1 in S609 fails, it indicates that the tag 1 is untrusted or insecure. Therefore, S610 is not performed, or registration of the tag 1 is rejected, or the access request of the tag 1 is rejected. Optionally, if the authentication performed by the AMF on the tag 1 in S609 fails, and the first operation is an inventory operation, even if the registration request message includes the third identification information of the tag 1, the AMF does not send the third identification information to the AF (via the TMF). In other words, because the tag 1 is untrusted UE, the AMF does not send, to the AF (via the TMF), the third identification information of the tag 1 obtained through inventory.

Optionally, the method 600 may further include: S610. The AMF sends security authentication complete indication information to the TMF, and the TMF receives the security authentication complete indication information from the AMF. The security authentication complete indication information indicates that security authentication is completed or security authentication succeeds.

Optionally, the security authentication complete indication information may indicate that security authentication of the tag 1 is completed (or security authentication of the tag 1 succeeds). In a possible implementation, a response message sent by the AMF to the TMF may indicate that security authentication is completed. In another possible implementation, a response message sent by the AMF to the TMF may include the security authentication complete indication information, and the security authentication complete indication information may indicate that security authentication is completed. Optionally, the response message sent by the AMF to the TMF may further include the second identification information or the third identification information. When the response message includes the second identification information or the third identification information, the response message may indicate that security authentication of the tag 1 identified by the second identification information or the third identification information is completed. In other words, the security authentication complete indication information may be a response message. In another possible implementation, a response message sent by the AMF to the TMF may include failure indication information and/or cause information. The failure indication information indicates that security authentication fails. The cause information indicates a cause value or a cause of the security authentication failure. Optionally, the response message sent by the AMF to the TMF may further include the second identification information or the third identification information. When the response message includes the second identification information or the third identification information, the response message may indicate that security authentication of the tag 1 identified by the second identification information or the third identification information fails. In a possible implementation, the AMF sends the security authentication complete indication information and the second identification information of the tag 1 to the TMF, indicating that security authentication of the tag 1 identified by the second identification information is completed. Alternatively, the AMF sends the security authentication complete indication information or the third identification information of the tag 1 to the TMF, indicating that security authentication of the tag 1 identified by the third identification information is completed.

In some possible implementations, a message type, a message name, an information element type, an information element name, or the like may be used as the security authentication complete indication information to indicate that security authentication succeeds, security authentication is completed, or the like. A name or a form of the security authentication complete indication information is not limited in this application.

Optionally, if the TMF sends the registration request message and the event identifier to the AMF in S608, the AMF may send the security authentication complete indication information and the event identifier to the TMF in S610, indicating that the security authentication indication information is security authentication indication information corresponding to the event identifier. Therefore, the TMF may determine that the security authentication complete indication information corresponds to the event identifier sent by the TMF to the RAN in S602. In this way, the TMF may determine that the security authentication complete indication information is a response corresponding to the request message in S601.

Optionally, in S610, the AMF may alternatively send the authentication complete indication information and a first registration accept message (registration accept) to the TMF. The first registration accept message may include a TA. Optionally, the AMF may alternatively send the authentication complete indication information, the first registration accept message, and the third identification information to the TMF. Optionally, the AMF may send the authentication complete indication information, the first registration accept message, and the event identifier to the TMF. Therefore, the TMF may determine that the registration complete indication information and the registration accept message correspond to the event identifier sent by the TMF to the RAN in S602. In this way, the TMF may determine that the registration complete indication information and the first registration accept message are a response corresponding to the request message in S601. Optionally, the AMF may send the authentication complete indication information, the first registration accept message, the third identification information, and the event identifier to the TMF. In this case, it indicates that the event identifier corresponds to the authentication complete indication information, the first registration accept message, and the third identification information. Therefore, the TMF may determine the registration complete indication information, the first registration accept message, and the third identification information correspond to the event identifier sent by the TMF to the RAN in S602. In this way, the TMF may determine that the registration complete indication information, the first registration accept message, and the third identification information are a response corresponding to the request message in S601.

It may be understood that S610 may alternatively not be performed. The AMF may not send the authentication complete indication information to the TMF, but may send the third identification information. When the TMF receives the third identification information, it implies that the AMF completes a security authentication or registration procedure of the tag 1 identified by the third identification information. Alternatively, the security authentication complete indication information in S610 may be that the AMF may send a first registration accept message to the TMF. To be specific, if the AMF sends the first registration accept message to the TMF, it indicates that the AMF completes a security authentication or registration procedure of the tag 1, and the AMF may not need to additionally send the security authentication complete indication information.

After S610, S611 may be performed.

S611. The TMF sends fourth information to the tag 1, and the tag 1 receives the fourth information from the TMF. The fourth information indicates to perform the first operation on the tag 1.

Optionally, if the TMF receives the first registration accept message from the AMF in S610, S611 includes: The TMF sends second registration accept information and the fourth information to the tag 1. Optionally, in a possible implementation, the second registration accept information may be understood as the first registration accept message or a part of or all information in the first registration accept message. In a possible implementation, the second registration accept message includes the fourth information. If the first registration accept message in S610 includes a TA, the second registration accept message in S611 may include the fourth information and the TA. In other words, the TMF sends the second registration accept message to the tag 1 based on the first registration accept message from the AMF.

S612 is the same as S511.

S613. The RAN sends the data corresponding to the first operation to the TMF, and the TMF receives the data corresponding to the first operation from the RAN.

Optionally, if the tag 1 sends the data corresponding to the first operation and the third identification information of the tag 1 to the RAN in S612, the RAN sends the data corresponding to the first operation and the third identification information of the tag 1 to the TMF in S612.

Optionally, if the tag 1 sends the UL NAS message to the RAN in S612, the RAN sends a second message to the TMF in S613. The second message includes the UL NAS message, and the UL NAS message includes the data corresponding to the first operation, or includes the data corresponding to the first operation and the third identification information of the tag 1.

Optionally, if the RAN receives the event identifier from the TMF in S603, in S613, the RAN may send the event identifier and the data corresponding to the first operation to the TMF, and the TMF receives the event identifier and the data corresponding to the first operation, indicating that the data corresponding to the first operation corresponds to (or may be understood as being associated or bound with) the event identifier, or in other words, the data corresponding to the first operation is data returned for the event identifier. Optionally, if the RAN receives the random access indication and the event identifier from the TMF in S603, and the tag 1 sends the data corresponding to the first operation and the third identification information to the RAN in S611, the RAN may alternatively send the third identification information of the tag 1, the event identifier, and the data corresponding to the first operation to the TMF, and the TMF receives the event identifier, the third identification information of the tag 1, and the data corresponding to the first operation, indicating that the data corresponding to the first operation on the tag 1 identified by the third identification information corresponds to (or may be understood as being associated or bound with) the event identifier. Optionally, if the tag 1 in S612 sends the UL NAS message to the RAN, and the UL NAS message may include the data corresponding to the first operation, or may include the data corresponding to the first operation and the third identification information, the RAN may alternatively send a third message to the TMF in S613. The third message includes the event identifier and the UL NAS message, indicating that the UL NAS message is feedback for the event identifier in S603.

In some embodiments, if the request message in S601 includes at least one piece of identification information, and a tag identified by each of the at least one piece of identification information corresponds to the foregoing execution process, after the corresponding execution process is completed for each tag identified by each of the at least one piece of identification information, the TMF may indicate the AMF to stop performing random access. Therefore, S614a may be performed. When the foregoing security authentication is not completed for tags identified by some of the at least one piece of identification information, the TMF may continue to indicate the AMF to perform random access of a next tag. Therefore, S614b may be performed.

S614a. The TMF sends sixth information to the RAN, and the RAN receives the sixth information from the TMF. The sixth information indicates to stop performing random access of the tag 1.

Optionally, if the TMF sends the second identification information of the tag 1 to the RAN in S603, S614a may include: The TMF sends the second identification information of the tag 1 and the sixth information to the RAN, and the RAN stops, based on the sixth information, random access of the tag 1 identified by the second identification information.

Optionally, if the TMF sends the at least one piece of identification information to the RAN in S603, S614a may include: The TMF sends the at least one piece of identification information and the sixth information to the RAN, and the RAN stops, based on the sixth information, random access of the tag identified by the at least one piece of identification information.

Optionally, if the TMF sends the event identifier to the RAN in S603, S614a includes: The TMF sends the sixth information and the event identifier to the RAN, and the RAN stops, based on the sixth information, random access of the tag 1 identified by the second identification information corresponding to (or may be understood as being associated or bound with) the event identifier. The event identifier corresponds to the second identification information and/or the random access indication.

Optionally, if the TMF sends the event identifier to the RAN in S603, S614a includes: The TMF sends the sixth information and the event identifier to the RAN, and the RAN stops, based on the sixth information, random access of the tag identified by the at least one piece of identification information corresponding to (or may be understood as being associated or bound with) the event identifier. The event identifier corresponds to the at least one piece of identification information and/or the random access indication.

S614b. The TMF sends, to the RAN, a random access indication for continuing to perform random access, and the RAN receives, from the TMF, the random access indication for continuing to perform random access.

Optionally, in S614b, the TMF may send, to the RAN, the random access indication for continuing to perform random access and fourth identification information of a tag 2, to indicate to continue to perform random access of the tag 2. Optionally, the at least one identifier included in the request message in S601 includes the fourth identification information.

Optionally, in S614b, the TMF may send, to the RAN, the event identifier generated based on the request message in S601 and the random access indication for continuing to perform random access, indicating that the random access indication corresponds to (or may be understood as being associated or bound with) the event identifier.

Optionally, in S614b, the TMF may send, to the RAN, the event identifier generated based on the request message in S601, the fourth identification information of the tag 2, and the random access indication for continuing to perform random access, indicating to continue to perform random access of the tag 2 corresponding to the event identifier. Optionally, the at least one identifier included in the request message in S601 includes the fourth identification information.

After S614b, the RAN continues to perform the random access indication of the tag 2, and then continues to perform steps similar to those after S604.

S615. The TMF may send the data corresponding to the first operation in S613 to the AF via the NEF, and the AF receives, from the TMF via the NEF, the data corresponding to the first operation.

Alternatively, S615 may be: The TMF may send the data corresponding to the first operation in S613 to the AF, and the AF receives, from the TMF, the data corresponding to the first operation.

Optionally, S615 may be performed after S613. There is no limitation on a sequence between S615 and S614a or S614b. S615 may be performed after, before, or simultaneously with S614a or S614b.

Optionally, when the request message in S601 includes at least one piece of identification information, a tag identified by each of the at least one piece of identification information may correspond to the foregoing process of performing security authentication and data transmission. After receiving data corresponding to a first operation on the tag identified by each of the at least one piece of identification information, the TMF may send the data together to the AF, or may separately send the data to the AF. This is not limited in this embodiment of this application.

It should be noted that the communication method 600 may include more or fewer steps, and the steps shown in FIG. 6 should not constitute any limitation on this embodiment of this application. For example, S614a and S614b in the communication method 600 are optional steps. For another example, the communication method 600 may not include S602.

In the communication method 600, there may be a communication interface between the TMF and the RAN, there may be a communication interface between the AMF and the TMF, and there may be no communication interface between the AMF and the RAN. After receiving the request message of the AF, the TMF may send the random access indication to the RAN. After the RAN completes random access of the tag 1, the tag 1 may send the registration request message. After the TMF receives the registration request message, the TMF sends the first information to the AMF to indicate the AMF to perform security authentication of the tag 1 after random access of the tag 1 succeeds. The AMF performs security authentication of the tag 1 after random access of the tag 1 succeeds. In this way, the AMF performs security authentication of the tag 1, and the TMF performs service data transmission of the tag 1. Therefore, a function for service data transmission of the tag 1 does not need to be integrated into the AMF, or a function for security authentication of the UE does not need to be integrated into the TMF, thereby reducing costs.

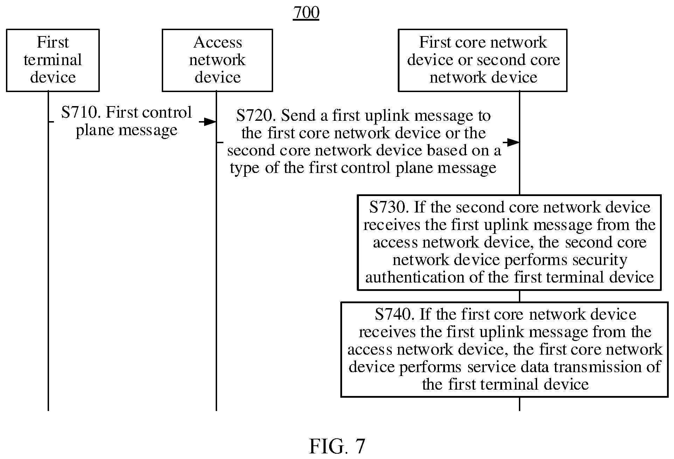

The following describes, with reference to FIG. 7, a communication method 700 provided in an embodiment of this application. The method shown in FIG. 7 is applicable to the system framework shown in FIG. 3. As shown in FIG. 7, the communication method 700 includes the following steps.

S710. A first terminal device sends a first control plane message to an access network device, and the access network device receives the first control plane message from the first terminal device.

Optionally, the first control plane message includes terminal type information of the first terminal device, and the terminal type information indicates that a terminal type of the tag 1 is a first terminal type. For example, the first terminal type is an internet-of-things terminal device. For another example, the first terminal type is an internet-of-things device obtaining energy. For another example, the first terminal type is a passive internet-of-things terminal device, a semi-passive internet-of-things terminal device, a semi-active internet-of-things terminal device, or an active internet-of-things terminal device. For still another example, the first terminal type is a passive terminal device that cannot store energy, a passive terminal device that can store energy, a semi-passive terminal device that cannot store energy, or a semi-passive terminal device that can store energy.

Optionally, the first control plane message may indicate the first terminal type of the first terminal device. For example, a first message type of the first control plane message may indicate the first terminal type of the first terminal device.

Optionally, before S710, the first terminal device may determine whether security authentication needs to be performed for the first terminal device. If the first terminal device determines that security authentication needs to be performed, the first terminal device sends a first control plane message of a second type to the access network device. Optionally, the message of the second type may be a message related to security authentication. For example, the message of the second type may be a registration request message. If the first terminal device determines that security authentication does not need to be performed, the first terminal device sends a first control plane message of a first type to the access network device. Optionally, the message of the first type is used for information transmission, that is, the message of the first type is used for information transmission. For example, the information transmission may include data transmission. In a possible implementation, the message of the first type and the message of the second type may be different NAS messages, and types of the NAS messages are different. For example, a message type of a NAS message used for information transmission is different from a message type of a NAS message used for security authentication.

Optionally, that the first terminal device may determine whether security authentication needs to be performed for the first terminal device includes: The first terminal device determines, based on seventh information, whether security authentication needs to be performed for the first terminal device. The seventh information indicates whether to perform security authentication of the first terminal device. Optionally, the access network device may broadcast the seventh information, or the first terminal device may store the seventh information. Optionally, the seventh information may be an authentication manner. To be specific, if the authentication manner indicated by the seventh information is two-way authentication, or one-way authentication performed by the first terminal device on a network or a requester, or one-way authentication performed by the network or the requester on the first terminal device, it indicates to perform security authentication of the first terminal device. If the authentication manner indicated by the seventh information is no authentication, it indicates not to perform security authentication of the first terminal device. Optionally, the seventh information may be a security parameter. If the access network device broadcasts the security parameter, it indicates to perform security authentication of the first terminal device; or if the access network device does not broadcast the security parameter, it indicates not to perform security authentication of the first terminal device. Alternatively, if the security parameter is configured and stored in the first terminal device, it indicates to perform security authentication of the first terminal device; or if the security parameter is not configured in the first terminal device, it indicates not to perform security authentication of the first terminal device.

Optionally, the method further includes: The first terminal device obtains first security policy information. Optionally, the first security policy information may include the seventh information. Optionally, that the first terminal device obtains the first security policy includes: The first terminal device may receive first security policy information from the access network device, or the first terminal device may obtain preconfigured first security policy information.

Optionally, the first security policy information may include at least one of a security key, a random number, a token (token) value, a security algorithm, an authentication manner, or a security policy. At least one of the security key, the random number, or the token value may be referred to as a security parameter. In a possible implementation, a second core network device may perform security authentication based on the random number and/or the security key. For example, when performing security authentication for the first terminal device, the second core network device may perform an operation on the random number by using the security key (for example, perform an encryption operation on the random number by using the security key), to obtain a check value (for example, a MAC value), and send the check value to the first terminal device. Alternatively, the second core network device performs an operation on a check value received from the first terminal device and the security key (for example, decrypt the check value by using the security key), to obtain a random number. Optionally, the security policy may include encryption protection, integrity protection, a NAS security policy, or an AS security policy. For example, the NAS security policy may include performing NAS security protection or not performing NAS security protection, and the AS security policy may include performing AS security protection or not performing AS security protection. Optionally, at least one of the security key, the random number, or the token value in the first security policy information may be referred to as a security parameter.

Optionally, the method further includes: The first terminal device obtains seventh information. Optionally, that the first terminal device obtains seventh information includes: The first terminal device obtains seventh information from the access network device, or the first terminal device obtains preconfigured seventh information.

Optionally, before S710, a first core network device may send a random access indication to the access network device. The random access indication indicates to perform random access for the first terminal device. The access network device performs random access of the first terminal device based on the random access indication. After the access network device performs random access of the first terminal device, the access network device may receive the first control plane message from the first terminal device. Optionally, the first core network device may send the random access indication and second identification information of the first terminal device to the access network device, to indicate to perform random access for the first terminal device identified by the second identification information. The access network device performs, based on the random access indication, random access of the first terminal device identified by the second identification information.

Optionally, before S710, the first core network device may receive a request message from a requester. The request message may include the second identification information of the first terminal device and an operation type, the request message indicates that a first operation indicated by the operation type is requested to be performed on the first terminal device identified by the second identification information. The first core network device may generate second information corresponding to the first operation.

S720. The access network device sends a first uplink message to the first core network device or the second core network device based on the type of the first control plane message, and the first core network device or the second core network device receives the first uplink message.

Optionally, S720 includes: If the type of the first control plane message is the first type, the access network device sends the first control plane message to the first core network device. The message of the first type is used for information transmission. If the type of the first control plane message is the second type, the access network device sends the first control plane message to the second core network device. The message of the second type is used for security authentication.

Optionally, before S720, if the first control plane message includes the terminal type of the first terminal device, and the terminal type information indicates that the terminal type of the first terminal device is the first terminal type, the access network device determines to send the first uplink message to the first core network device or the second core network device based on the type of the first control plane message. For example, if the first terminal type is an internet-of-things terminal device, the access network device determines to send the first uplink message to the first core network device or the second core network device based on the type of the first control plane message. To be specific, the access network device generally does not need to determine, based on a terminal type, a core network device to which the first uplink message is to be sent, but when the first terminal type of the first terminal device is an internet-of-things terminal device, the access network device needs to determine a core network device to which the first uplink message is to be sent.

Optionally, if the access network device sends the first uplink message to the first core network device, the first uplink message may include a UL NAS message. If the access network device sends the first uplink message to the second core network device, the first uplink message may include the registration request message.

S730. If the second core network device receives the first uplink message from the access network device, the second core network device performs security authentication of the first terminal device.

Optionally, after the second core network device completes security authentication of the first terminal device, the second core network device may send a second control plane message to the access network device. The second control plane message indicates that security authentication of the first terminal device is completed. Optionally, when the access network device receives the second information from the first core network device, after receiving the second control plane message, the access network device sends the second information to the first terminal device, and the first terminal device may determine, based on the second information, the first operation to be performed.

Optionally, the first operation is a read operation, a write operation, a disable operation, a locking operation, or a positioning operation. Specifically, for descriptions of the first operation, refer to descriptions in the communication method 400 and the communication method 500. To avoid repetition, details are not described again.

S740. If the first core network device receives the first uplink message from the access network device, the first core network device performs transmission of service data of the first terminal device.

Optionally, when the first security policy information includes a security parameter, the security parameter includes a token (token) value, the seventh information indicates the first terminal device to perform security authentication, and the token value is N, the communication method 700 further includes: after the first terminal device performs N service data transmissions of the first terminal device with the first core network device, sending a third control plane message of the second type to the access network device. To be specific, the token value indicates that a quantity of service data transmissions performed by the first terminal device is N. After the first terminal device completes N service data transmissions, it indicates that authentication needs to be re-performed for the first terminal device. This can avoid a complex signaling process in which security authentication is required each time the first terminal device performs service data transmission, and can avoid a security problem caused by not authenticating the first terminal device for a long time.

Optionally, for one transmission of the access network device, S730 or S740 may be performed. When S730 is performed, for subsequent transmission, the access network device may continue to send a second uplink message to the first core network device, and the first core network device may perform service data transmission of the first terminal device based on the second uplink message. In other words, if the second core network device receives the first uplink message from the access network device, after the second core network device performs security authentication of the first terminal device, the first core network device may continue to perform service data transmission of the first terminal device.

In the foregoing solution, the access network device may determine, based on the type of the first control plane message from the first terminal device, whether to send the first uplink message to the first core network device or send the first uplink message to the second core network device. To be specific, when the access network device has communication interfaces to both the first core network device and the second core network device, the access network device needs to determine, based on the type of the first control plane message from the first terminal device, a core network device to which the first uplink message is to be sent. The first uplink message varies with different core network devices. In this way, the second core network device may perform security authentication of the first terminal device when receiving the first uplink message, and the first core network device may perform service data transmission of the first terminal device when receiving the first uplink message, which avoids overheads caused when both a security authentication module and a service data transmission module need to be integrated into one core network device (for example, the first core network device or the second core network device), thereby reducing costs.

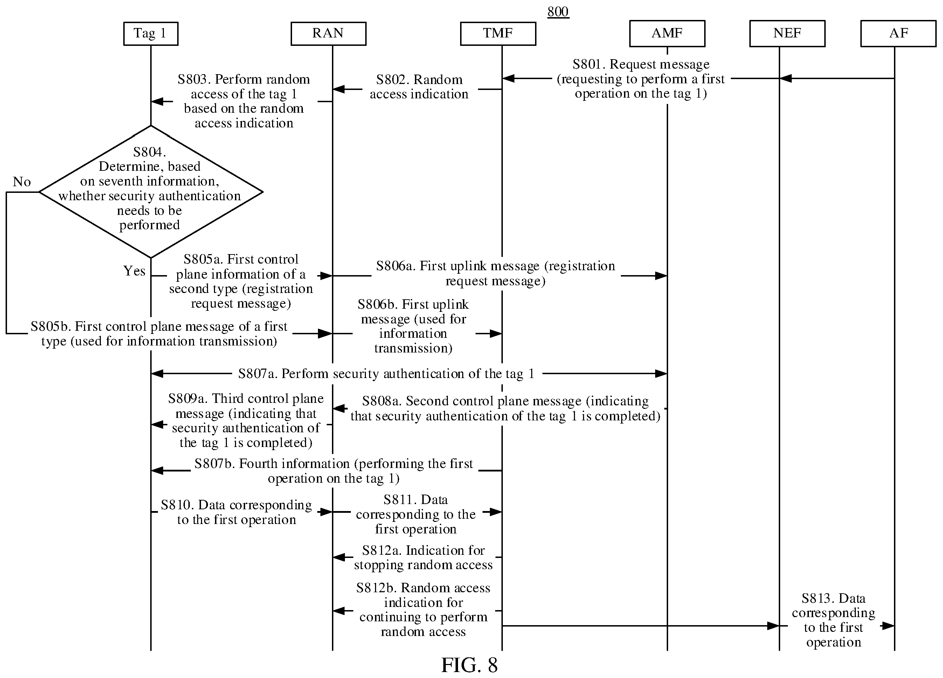

The following describes, with reference to FIG. 8, a communication method 800 provided in an embodiment of this application in the architecture shown in FIG. 3. In the communication method 800, an example in which a first core network device is a TMF, a second core network device is an AMF, a requester is an AF, an access network device is a RAN, and a first terminal device is a tag 1 is used for description, but this embodiment of this application is not limited thereto. As shown in FIG. 8, the communication method 800 includes the following steps.

S801. The AF sends a request message to the TMF via the NEF, and the TMF receives the request message from the AF via the NEF. The request message is used to request to perform a first operation on the tag 1.

Alternatively, S801 may be replaced with that The AF sends a request message to the TMF, and the TMF receives the request message from the AF. The request message is used to request to perform an operation on the tag 1. That is, the AF may directly send the request message to the TMF without forwarding by the NEF.

Optionally, the request message includes an operation type, and the operation type indicates the first operation, indicating that the request message requests to perform, on the tag 1, the first operation indicated by the operation type. The operation type may also be referred to as an instruction type.

Optionally, a message type of the request message may indicate the first operation. For example, if the request message from the requester belongs to a type 1, and the request message includes second identification information, it indicates that the first operation corresponding to the type 1 is requested to be performed on the tag 1 identified by the second identification information. In this way, the request message does not need to carry an additional parameter to indicate the first operation, thereby reducing overheads.

Optionally, the first operation may be a read operation, a write operation, a disable operation, a locking operation, a positioning operation, an inventory operation, an operation of obtaining tag information, an operation of message exchange with a tag, or an operation of sending payload to a tag. When the first operation is a read operation, a write operation, a disable operation, a locking operation, a positioning operation, an operation of obtaining tag information, an operation of message exchange with a tag, or an operation of sending payload to a tag, the tag 1 also needs to be inventoried first, that is, third identification information of the tag 1 needs to be obtained. If the third identification information of the tag 1 is obtained, the read operation, the write operation, the disable operation, the locking operation, the positioning operation, the operation of obtaining tag information, the operation of message exchange with a tag, or the operation of sending payload to a tag may continue to be performed on the tag 1. Optionally, the first operation may alternatively be another operation. The first operation is not limited in embodiments of this application.

Optionally, the request message includes the second identification information of the tag 1 and the operation type, and the request message indicates that the first operation indicated by the operation type is requested to be performed on the tag 1 identified by the second identification information. Alternatively, the request message may include the second identification information but does not include the operation type, and the message type of the request message may indicate to perform the first operation on the tag 1 identified by the second identification information.

Optionally, the request message may alternatively include at least one piece of identification information, the at least one piece of identification information is used to identify at least one tag, the at least one piece of identification information includes the second identification information, and the at least one terminal device includes the tag 1. That is, the request message may alternatively indicate that the first operation indicated by the operation type is requested to be performed on a tag identified by each of the at least one piece of identification information.

Optionally, the request message may alternatively include first identification information of the AF. For example, the AF may be the AF in FIG. 1, and the first identification information of the AF may be identification information of the AF. In a possible implementation, when the request message includes the first identification information of the AF, the request message may request to perform the first operation on a tag belonging to the AF. For example, when the request message includes the first identification information of the AF, but does not include the second identification information of the tag 1, the request message may indicate to perform the first operation on the tag belonging to the AF. In a possible implementation, the tag belonging to the AF may be understood as a tag managed by the AF or a tag associated with the first identification information of the AF.

Optionally, the request message may further include first security policy information. For descriptions of the first security policy information, refer to the descriptions of the communication method 700.

Optionally, before S801, the tag 1 may be initialized. The initializing the tag 1 may be understood as writing at least one of the third identification information, a security key, or service data of the tag 1 into the tag 1.

Optionally, the method 800 may further include: S802. The TMF sends a random access indication to the RAN, and the RAN receives the random access indication from the TMF. The random access indication indicates to perform random access for the tag 1.

Optionally, that the random access indication indicates to perform random access for the tag 1 may be replaced with that the random access indication indicates to allow random access of the tag 1, or indicates the RAN to perform a random access procedure of the tag 1, or indicates the RAN to initiate random access of the tag 1, or indicates that random access performed by the RAN may include random access of the tag 1.

Optionally, the TMF may generate an event identifier based on the request message in S801. In S802, the TMF may send the random access indication and/or the event identifier to the RAN. In this case, the event identifier corresponds to (or may be understood as being associated or bound with) the random access indication.

Optionally, the TMF may alternatively send second identification information of the tag 1 and/or the random access indication to the RAN, indicating to perform random access for the tag 1 identified by the second identification information. Optionally, the TMF may generate an event identifier based on the request message in S801. In S802, the TMF may send at least one of the random access indication, the event identifier, or the second identification information to the RAN. In this case, the event identifier corresponds to (or may be understood as being associated or bound with) the second identification information and/or the random access indication.

Optionally, if the request message in S801 further includes at least one piece of identification information, in S803, the TMF may send the at least one piece of identification information and/or the random access indication to the RAN, indicating to perform random access for UE identified by each of the at least one piece of identification information. Optionally, the TMF may generate an event identifier based on the request message in S801. In S803, the TMF may send at least one of the event identifier, the random access indication, or the at least one piece of identification information to the RAN. In this case, the event identifier corresponds to (or may be understood as being associated or bound with) the at least one piece of identification information and/or the random access indication.

Optionally, when the request message in S801 includes the operation type and the operation type indicates the first operation, the TMF generates second information corresponding to the first operation indicated by the operation type, and may send the second information and the random access indication information to the RAN in S802.

Optionally, the TMF may further send the first security policy information to the RAN. The first security policy information may include seventh information, and the seventh information indicates whether to perform security authentication for the tag 1. In this case, the random access indication and the first security policy information in S802 may be sent in a same message, or may be sent in different messages. This is not limited in this embodiment of this application.

Optionally, the TMF may alternatively send the seventh information in the first security policy information to the RAN. The seventh information indicates whether to perform security authentication for the tag 1. In this case, the random access indication and the seventh information in S802 may be sent in a same message, or may be sent in different messages. This is not limited in this embodiment of this application.

Optionally, the TMF may send at least one of the random access indication, the second identification information, the event identifier, or the seventh information to the RAN. The event identifier may correspond to (or may be understood as being associated or bound with) at least one of the random access indication, the second identification information, or the seventh information. Alternatively, the TMF may send at least one of the random access indication, the at least one piece of identification information, the event identifier, or the seventh information to the RAN. The event identifier may correspond to (or may be understood as being associated or bound with) at least one of the random access indication, the at least one piece of identification information, or the seventh information.

S803. The RAN performs random access of the tag 1 based on the random access indication.

Optionally, if the RAN receives the random access indication and the second identification information from the TMF in S802, the RAN initiates a random access procedure based on the random access indication. In a possible implementation, the RAN generates a random access instruction based on the random access indication, and broadcasts the random access instruction (for example, a select command). The random access instruction may include the second identification information or mask information indicating the second identification information. The tag 1 may listen to the random access instruction. The RAN may continue to broadcast a query (query) instruction. If the second identification information in the random access instruction is identification information of the tag 1, the tag 1 receives the query (query) command and feeds back a random number to the RAN. For example, the random number is an RN 16. If the second identification information in the random access instruction is not identification information of the tag 1, the tag 1 does not perform any action. After the RAN receives the random number, the RAN may send an acknowledgment (acknowledgment, ACK). The ACK may include the random number received by the RAN. After the random number included in the ACK received by the tag 1 is the random number fed back by the tag 1, the tag 1 may perform S804.

Optionally, if the RAN receives the random access indication and the at least one piece of identification information from the TMF in S802, the RAN initiates a random access procedure based on the random access indication. In a possible implementation, the RAN generates a random access instruction (for example, a select command) based on the random access indication, and broadcasts the random access instruction. The random access instruction may include the at least one piece of identification information. The tag 1 may listen to the random access instruction. The RAN may continue to broadcast a query (query) instruction. If the at least one piece of identification information in the random access instruction includes the second identification information of the tag 1 or the at least one piece of identification information indicated by the mask information in the random access instruction includes the second identification information of the tag 1, the tag 1 receives the query (query) command and feeds back a random number to the RAN. For example, the random number is an RN 16. If the at least one piece of identification information in the random access instruction does not include the second identification information of the tag 1, or the at least one piece of identification information indicated by the mask information in the random access instruction does not include the second identification information, the tag 1 does not perform any action. After the RAN receives the random number, the RAN may send an acknowledgment (acknowledgment, ACK). The ACK may include the random number received by the RAN. After the random number included in the ACK received by the tag 1 is the random number fed back by the tag 1, the tag 1 may perform S508. After the tag 1 performs S508, it indicates that random access is completed.

Optionally, the random access indication may specifically indicate to perform random access of a terminal device (for example, the tag 1) in a first random access mode. For example, the first random access mode may be continuously performing random access. For example, after completing a random access procedure of a terminal device (for example, the tag 1), the RAN may continue to perform a random access procedure of a next terminal device (for example, a tag 2) without waiting for random access continued indication information of a core network device (for example, the AMF or the TMF). Alternatively, the random access indication may specifically indicate to perform random access of a terminal device (for example, the tag) in a second random access mode. For example, after completing a random access procedure of a terminal device (for example, the tag 1), the RAN needs to wait or continue to perform random access of another terminal device (for example, the tag 2) based on an indication of a core network device (for example, the AMF or the TMF).

Optionally, the RAN may be a reader (reader), and the tag 1 may be a tag. The reader interacts with the tag by using a radio frequency signal or a radio signal. The reader may be replaced with another term. A name of a device that performs random access of the tag 1 is not limited in embodiments of this application, and any device that has a functionality of performing random access of the tag 1 may be referred to as a reader.

Optionally, the TMF may send a security parameter to the RAN in S802. When the security parameter includes a random number and/or a token value, in S803, the RAN may broadcast the random access indication and the security parameter to the tag 1, and the tag 1 accesses the RAN based on the random access indication and the security parameter.

Optionally, if the TMF further sends the first security policy information to the RAN in S802, the RAN may further send the first security policy information to the tag 1 when performing random access for the tag 1.

Optionally, if the TMF may alternatively send the seventh information in the first security policy information to the RAN in S802, the RAN may further send the seventh information to the tag 1 when performing random access for the tag 1.

S804. The tag 1 determines, based on seventh information, whether security authentication needs to be performed for the tag 1. If the tag 1 determines, based on the seventh information, that security authentication needs to be performed for the tag 1, S805a is performed. If the tag 1 determines, based on the seventh information, that security authentication does not need to be performed for the tag 1, S805b is performed. The seventh information indicates whether to perform security authentication of the tag 1.

Optionally, if the tag 1 receives the first security policy information sent by the RAN, and the first security policy information includes the seventh information, in S804, the tag 1 may determine, based on the seventh information in the first security policy information from the RAN, whether security authentication needs to be performed for the tag 1.

Optionally, if first security policy information preconfigured in the tag 1 includes seventh information, the tag 1 may determine, based on the seventh information in the preconfigured first security policy information, whether security authentication needs to be performed for the tag 1.

Optionally, if the seventh information is an authentication manner, and the authentication manner indicates that two-way authentication needs to be performed for the tag 1, or the tag 1 needs to perform one-way authentication on the requester or a network, or the requester or the network needs to perform one-way authentication on the tag 1, it indicates that security authentication needs to be performed for the tag 1, and S805a is performed. If the authentication information indicates that no authentication needs to be performed for the tag 1, S805b is performed. If the first terminal device obtains the seventh information, where the seventh information is a security parameter, it indicates that security authentication needs to be performed for the tag 1, and S805a is performed. If the first terminal device does not obtain the seventh information, where the seventh information is a security parameter, it indicates that security authentication does not need to be performed for the tag 1. The security parameter includes at least one of a security key, a random number, or a token value.

S805a. The tag 1 sends a first control plane message of a second type to the RAN, and the RAN receives the first control plane message of the second type from the tag 1. The first control plane message of the second type may include a registration request message.

Optionally, when the first control plane message of the second type may include a registration request message, the registration request message is used for security authentication.

Optionally, the registration request message is used to access or register with the second core network device, or is used to access or register with the network or the like. Optionally, the registration request message may be replaced with a request message or an access request message. Optionally, the request message may be replaced with a NAS request message, and the access request message may be replaced with a NAS access request message.

Optionally, the registration request message may include a terminal type of the tag 1. Optionally, the registration request message may include the third identification information of the tag 1. Optionally, the registration request message may include the terminal type of the tag 1 and the third identification information of the tag 1.

Optionally, the first control plane message of the second type may include terminal type information of the tag 1, and the terminal type information indicates a first terminal type of the tag 1. Optionally, the first control plane message of the second type may include the registration request message and the terminal type information of the tag 1. The registration request message may also include the terminal type information of the tag 1, or may include the third identification information of the tag 1, or may include the third identification information of the tag 1 and the terminal type information of the tag 1.

S805b. The tag 1 sends a first control plane message of a first type to the RAN, and the RAN receives the first control plane message of the first type from the tag 1. The first control plane message of the first type is used for information transmission.

For example, the first control plane message of the first type may include a UL NAS message, and the UL NAS message is used for information transmission. Optionally, the UL NAS message may include the third identification information of the tag 1.

Optionally, the first control plane message of the first type may include the terminal type information of the tag 1. Optionally, the first control plane message of the first type may include the UL NAS message and the terminal type information of the tag 1, and the UL NAS message includes the third identification information of the tag 1 and the terminal type information of the tag 1.

After S805a or S806b, the RAN may determine, based on the type of the first control plane message received from the tag 1, whether to send a first uplink message to the AMF or the TMF. Specifically, if the RAN receives the first control plane message of the second type from the tag 1, S806a is performed. If the RAN receives the first control plane message of the first type from the tag 1, S806b is performed.

S806a. The RAN sends a first uplink message to the AMF, and the AMF receives the first uplink message from the RAN. The first uplink message may include the registration request message in S805a.

Optionally, if the TMF sends the event identifier to the RAN in S802, the first uplink message in S806a may include the event identifier, indicating that the first uplink message is a message corresponding to the event identifier in S802.

Optionally, if the first control plane message of the second type in S805a includes the registration request message, and the TMF sends the event identifier to the RAN in S802, the first uplink message in S806a may include the event identifier and/or the registration request message. The registration request message may also include the terminal type information of the tag 1, or may include the third identification information of the tag 1, or may include the third identification information of the tag 1 and the terminal type information of the tag 1.

S806b. The RAN sends a first uplink message to the TMF, and the TMF receives the first uplink message from the RAN. The first uplink message is used for information transmission.

Optionally, the first control plane message of the first type in S805b may include a UL NAS message. Optionally, the UL NAS message may include the third identification information of the tag 1. In this case, in S806b, the first uplink message may also include the third identification information of the tag 1.

Optionally, if the TMF sends the event identifier to the RAN in S802, the first uplink message in S806b may include the event identifier, indicating that the first uplink message is a message corresponding to the event identifier in S802.

Optionally, the first control plane message of the first type in S805b includes a UL NAS message. Optionally, the UL NAS message may include the third identification information of the tag 1, and the TMF sends the event identifier to the RAN in S802. In this case, the first uplink message in S806b may include the event identifier and the UL NAS message, indicating that the first uplink message is a message corresponding to the event identifier in S802.

Optionally, if the first control plane message of the first type in S805b includes the terminal type information of the tag 1 or the first control plane message of the second type in S805a includes the terminal type information of the tag 1, the RAN determines, based on the terminal type information of the tag 1 included in the first control plane message, that whether to send a first uplink message to the AMF or the TMF needs to be determined based on the type of the first control plane message. For example, if the terminal type information of the tag 1 indicates that the tag 1 is the first terminal type, and the first terminal type is an internet-of-things terminal device, because the AMF performs security authentication of the internet-of-things terminal device, and the TMF performs service data transmission of the internet-of-things terminal device, the RAN needs to further determine the type of the first control plane message, to choose, based on the type of the first control plane message, whether to send a first uplink message to the AMF or the TMF. Therefore, S806a or S806b needs to be performed.

S807b may be performed after S806b.

S807a. The AMF performs security authentication of the tag 1.

Optionally, if the registration request message in S806a includes the third identification information of the tag 1, S807a includes: The AMF performs security authentication of the tag 1 identified by the third identification information. In other words, if the registration request message includes the third identification information of the tag 1, it indicates that random access of the tag 1 succeeds, and the AMF may determine, based on the third identification information in the registration request message, to perform security authentication of the tag 1.

Optionally, if the registration request message in S806a includes the terminal type information of the tag 1, and the terminal type information indicates that the terminal type of the tag 1 is the first terminal type, for example, the first terminal type is an internet-of-things device (for example, a passive internet-of-things device), before S807a, the communication method 800 further includes: The AMF determines, based on the first terminal type of the tag 1, that security authentication of the tag 1 needs to be performed. In other words, if the first terminal type of the tag 1 is not an internet-of-things terminal device (for example, not a passive internet-of-things terminal device), S807a may not be performed. When the first terminal type of the tag 1 is an internet-of-things terminal device (for example, a passive internet-of-things terminal device), the AMF may perform S807a.

Optionally, if the tag 1 receives, in S802, the security parameter broadcast by the RAN, that the AMF performs security authentication of the tag 1 in S807a may include: The AMF performs security authentication of the tag 1 based on the security parameter received by the tag 1. For example, the security parameter may include a random number and a security key. In this case, the tag 1 may generate a check value by using the random number and the security key, and send the generated check value to the AMF. The AMF generates a check value based on the random number and the security key, and determines whether the check value from the tag 1 is the same as the check value generated by the AMF. If the two are the same, it indicates that authentication performed by the AMF on the tag 1 succeeds. For another example, the AMF may send the random number and the security key to the tag 1 via the RAN. The tag 1 may generate a check value by using the random number and the security key, and send the generated check value to the AMF. The AMF decrypts the check value from the tag 1 based on the sent security key, to obtain a decrypted random number. The AMF determines whether the decrypted check value is the same as the random number sent by the AMF. If the two are the same, it indicates that authentication performed by the AMF on the tag 1 succeeds.

Optionally, if the authentication performed by the AMF on the tag 1 in S807a succeeds, it indicates that the tag 1 is a secure, trusted, or authorized tag, S808a may be performed. If the authentication performed by the AMF on the tag 1 in S807a fails, it indicates that the tag 1 is untrusted or insecure. Therefore, S808a is not performed, or registration of the tag 1 is rejected, or the access request of the tag 1 is rejected. Optionally, if the authentication performed by the AMF on the tag 1 in S807a fails, and the first operation is an inventory operation, even if the registration request message includes the third identification information of the tag 1, the AMF does not send the third identification information to the AF (via the TMF). In other words, because the tag 1 is untrusted UE, the AMF does not send, to the AF (via the TMF), the third identification information of the tag 1 obtained through inventory.

In a possible implementation, the authentication process may alternatively be performed by another device (for example, another core network device or an authentication server). For example, the another device may include at least one of the AMF, the TMF, an AUSF, a UDM, a UDR, the NEF, an NSSAAF, the AF, or an AAA server. When the authentication process is performed by the another device, the AMF may initiate an authentication procedure, and forward security authentication signaling.

S808a. The AMF sends a second control plane message to the RAN, and the RAN receives the second control plane message from the AMF. The second control plane message indicates that security authentication of the tag 1 is completed.

Optionally, if the RAN sends the event identifier to the AMF in S806a, the second control plane message in S808a may include the event identifier, indicating that the second control plane message is feedback corresponding to the event identifier.

Optionally, the second control plane message includes a registration accept message, or the second control plane message may be a registration accept message. The registration accept message indicates that security authentication of the tag 1 is completed.

Optionally, if the RAN sends the event identifier to the AMF in S806a, the second control plane message in S808a may include the registration accept message and the event identifier, indicating that the registration accept message in the second control plane message is feedback corresponding to the event identifier.

Optionally, the registration accept message in the second control plane message may include a TA.

S809a. The RAN sends a third control plane message to the tag 1, the tag 1 receives the third control plane message from the RAN. The third control plane message indicates that security authentication of the tag 1 is completed.

Optionally, if the second control plane message in S808a may include the registration accept message or the second control plane message is the registration accept message, the third control plane message may also include the registration accept message, or the registration accept message may also be the third control plane message, indicating that security authentication of the tag 1 is completed.

Optionally, if the TMF sends the second information to the RAN in S802, the third control plane message includes the second information. Optionally, if the third control plane message is a registration accept message, the registration accept message includes the second information. This avoids overheads caused when the RAN needs to use dedicated signaling to send the second information after S809a. For example, if the first operation is a read operation, a write operation, a disable operation, a locking operation, or a positioning operation, the third control plane message may include the second information.

Optionally, if the registration accept message in S808a includes a TA, the registration accept message in S809a may also include the TA.

Optionally, if the TMF sends the second information to the RAN in S802, but the third control plane message of the RAN in S809a does not include the second information, the RAN may send the second information to the tag 1 after S809a.

Optionally, the TMF may alternatively not send the second information to the RAN in S802. After S809a, the RAN may send an operation request message to the TMF, and the TMF returns a response message for the operation request message to the RAN. The response message includes the second information. After receiving the response message, the RAN sends the second information to the RAN.

After S809a, S810 may be performed. To be specific, if the AMF performs security authentication of the tag 1, steps S805a, S806a, S807a, S808a, and S809a related to security authentication may be performed. After these steps related to security authentication are performed, S810 may be performed, that is, data corresponding to the first operation may start to be transmitted.

S807b. The TMF sends fourth information to the tag 1, and the tag 1 receives the fourth information from the TMF. The fourth information indicates to perform the first operation on the tag 1.

S810 may be performed after S807b.

S810 is the same as S612.

S811 is the same as S613.

S812a is the same as S614a.

S812b is the same as S614b.

S813 is the same as S615.

To be specific, if S805a is performed after S804, steps S806a, S807a, S808a, S809a, S810, S811, S812a or S812b, and S813 continue to be performed, indicating that after the AMF completes security authentication of the tag 1, the TMF performs service data transmission of the tag 1. If S805b is performed after S804, S806b, S807a, S810, S811, S812a or S812b, and S813 continue to be performed, indicating that the AMF does not perform security authentication of the tag 1, and the TMF performs service data transmission of the tag 1.

It should be noted that the communication method 800 may include more or fewer steps, and the steps shown in FIG. 8 should not constitute any limitation on this embodiment of this application. For example, S812a and S812b in the communication method 800 are optional steps.

In the communication method 800, there is a communication interface between the TMF and the RAN, there is a communication interface between the AMF and the RAN, and there is no communication interface between the AMF and the TMF. After receiving the request message of the AF, the TMF may send the random access indication to the RAN. The RAN performs random access of the tag 1. When determining, based on the authentication information, that security authentication needs to be performed, the tag 1 may send the first control plane message of the second type to the RAN. The first control plane message of the second type may include the registration request message. The RAN may send, to the AMF, the first uplink message including the registration request message. The AMF performs security authentication of the tag 1. When the tag 1 determines, based on the authentication information, that security authentication does not need to be performed, the tag 1 may send the first control plane message of the first type to the RAN. The first control plane message of the first type may include the UL NAS message, and the RAN may send, to the TMF, the first uplink message including the UL NAS message. In this way, the AMF performs security authentication of the tag 1, and the TMF performs service data transmission of the tag 1. Therefore, a function for service data transmission of the tag 1 does not need to be integrated into the AMF, or a function for security authentication of the UE does not need to be integrated into the TMF, thereby reducing costs.

It should be noted that, as described above for brevity, the first core network device or the second core network device may obtain the first security policy information, and the first terminal device may obtain the first security policy information. When the first security policy information includes a plurality of pieces of information, the plurality of pieces of information may be obtained in different manners. For example, if the first security policy information includes a random number and a token value, the first terminal device may obtain a preconfigured random number, and receive a token value from the access network device.

Optionally, in embodiments of this application, the second identification information or the third identification information may indicate an electronic product code (electronic product code, EPC) of the first terminal device, or may indicate an identifier temporarily allocated to the first terminal device, for example, an identifier temporarily allocated by the network or an identifier temporarily allocated by the requester. The second identification information and the third identification information are not limited in embodiments of this application.

Optionally, the requester in embodiments of this application may also be referred to as an operation requester, and the requester may be a server or an application function. In embodiments of this application, the requester may be understood as a device that sends a request message. For example, the requester may be a server (server), an IoT server, an application function (application function, AF), or another device that sends an operation instruction. The operation requester may correspond to a specific type of user. The specific type of user includes an enterprise, a tenant, a third party, or a company, which is not limited. That the requester corresponds to a specific type of user may be understood as that the requester belongs to the type of user and is managed by the type of user.

Optionally, the first identification information of the AF in embodiments of this application may be an identifier of the AF, information used to identify the AF, or identification information corresponding to the AF. For example, the first identification information may be an AF identifier, an AF identity, an application service identity, an application service identifier, an application (application, APP) id, a service profile id, an application server address (for example, an IP address, an IPv4 address, an IPv6 prefix, or a MAC address), an application server port (a TCP or UDP port number), a connection ID, a path ID, a user identifier (user identifier or user identity), a data network name (data network name, DNN), or slice information (for example, single network slice selection assistance information (single network slice selection assistance information, S-NSSAI)).

In a possible implementation, security authentication in this application may be replaced with access management or access control.

In embodiments of this application, nouns such as the registration request message, the request message, and the registration accept message are intended for ease of description, and may be other nouns in some cases. This is not limited in embodiments of this application. For example, the registration request message may be replaced with a message, and the request message may be replaced with a message.

The foregoing describes the method embodiments provided in this application, and the following describes apparatus embodiments provided in this application. It should be understood that descriptions of the apparatus embodiments correspond to the descriptions of the method embodiments. Therefore, for content that is not described in detail, refer to the foregoing method embodiments. For brevity, details are not described herein again.

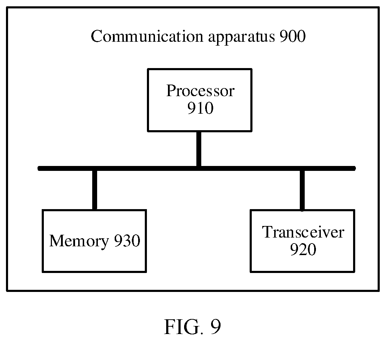

FIG. 9 shows a communication apparatus 900 according to an embodiment of this application. The communication apparatus 900 includes a processor 910 and a transceiver 920. The processor 910 and the transceiver 920 communicate with each other over an internal connection path. The processor 910 is configured to execute instructions, to control the transceiver 920 to send a signal and/or receive a signal.

Optionally, the communication apparatus 900 may further include a memory 930. The memory 930 communicates with the processor 910 and the transceiver 920 over the internal connection path. The memory 930 is configured to store instructions. The processor 910 may execute the instructions stored in the memory 930. In a possible implementation, the communication apparatus 900 is configured to implement procedures and operations corresponding to the first core network device in the method 400, the TMF in the method 500, or the TMF in the method 600. In a possible implementation, the communication apparatus 900 is configured to implement procedures and operations corresponding to the second core network device in the method 400, the AMF in the method 500, or the AMF in the method 600. In a possible implementation, the communication apparatus 900 is configured to implement procedures and operations corresponding to the access network device in the method 700 or the RAN in the method 800. In a possible implementation, the communication apparatus 900 is configured to implement procedures and operations corresponding to the first terminal device in the method 700 or the tag 1 in the method 800.

It should be understood that the communication apparatus 900 may be specifically the devices in the foregoing embodiments, or may be a chip or a chip system. Correspondingly, the transceiver 920 may be a transceiver circuit of the chip. This is not limited herein. Specifically, the communication apparatus 900 may be configured to perform operations and/or procedures corresponding to the devices in the foregoing method embodiments. Optionally, the memory 930 may include a read-only memory and a random access memory, and provide instructions and data to the processor. A part of the memory may further include a non-volatile random access memory. For example, the memory may further store information about a device type. The processor 910 may be configured to execute the instructions stored in the memory, and when the processor 910 executes the instructions stored in the memory, the processor 910 is configured to perform procedures and/or operations corresponding to the devices in the foregoing method embodiments.

In an implementation process, the operations in the foregoing methods may be completed by using a hardware integrated logical circuit in the processor or instructions in a form of software. The operations in the methods disclosed with reference to embodiments of this application may be directly performed and completed by a hardware processor, or may be performed and completed by using a combination of hardware in the processor and a software module. The software module may be located in a storage medium mature in the art, such as a random access memory, a flash memory, a read-only memory, a programmable read-only memory, an electrically erasable programmable memory, or a register. The storage medium is located in the memory. The processor reads information in the memory and completes the operations in the foregoing methods in combination with hardware of the processor. To avoid repetition, details are not described herein again.

It should be noted that, the processor in embodiments of this application may be an integrated circuit chip, and has a signal processing capability. In an implementation process, the operations in the foregoing method embodiments may be completed by using a hardware integrated logical circuit in the processor or instructions in a form of software. The processor may be a general-purpose processor, a digital signal processor (DSP), an application-specific integrated circuit (ASIC), a field-programmable gate array (FPGA) or another programmable logic device, a discrete gate or a transistor logic device, or a discrete hardware component. The processor may implement or execute methods, operations, and logical block diagrams disclosed in embodiments of this application. The general-purpose processor may be a microprocessor, or the processor may be any conventional processor or the like. The operations in the methods disclosed with reference to embodiments of this application may be directly performed and completed by a hardware decoding processor, or may be performed and completed by using a combination of hardware in the decoding processor and a software module. The software module may be located in a storage medium mature in the art, such as a random access memory, a flash memory, a read-only memory, a programmable read-only memory, an electrically erasable programmable memory, or a register. The storage medium is located in the memory. The processor reads information in the memory and completes the operations in the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that, the memory in the systems and methods described in this specification aims to include but is not limited to these memories and any memory of another proper type.

According to the methods provided in embodiments of this application, this application further provides a computer program product. The computer program product includes computer program code. When the computer program code is run on a computer, the computer is enabled to perform operations or procedures performed by the devices in the foregoing method embodiments.

According to the methods provided in embodiments of this application, this application further provides a computer-readable storage medium. The computer-readable storage medium stores program code. When the program code is run on a computer, the computer is enabled to perform operations or procedures performed by the devices in the foregoing method embodiments.

According to the methods provided in embodiments of this application, this application further provides a communication system, including at least two of the plurality of devices.

The foregoing apparatus embodiments completely correspond to the method embodiments. A corresponding module or unit performs a corresponding operation. For example, a communication unit (transceiver) performs a receiving operation or a sending operation in the method embodiments, and a processing unit (processor) may perform an operation other than the sending operation and the receiving operation. A functionality of a specific unit may be based on a corresponding method embodiment. There may be one or more processors.

In embodiments of this application, the terms and English abbreviations are all examples given for ease of description, and should not constitute any limitation on this application. This application does not exclude a possibility of defining another term that can implement a same or similar functionality in an existing or future protocol.

It should be understood that "and/or" in this specification describes an association relationship between associated objects, and indicates that three relationships may exist. For example, A and/or B may indicate the following three cases: A exists alone, both A and B exist, and B exists alone, where A and B may be singular or plural. The character "/" generally indicates an "or" relationship between the associated objects.

In descriptions of this application, "at least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural. In addition, to clearly describe technical solutions in embodiments of this application, words such as "first" and "second" are used in embodiments of this application to distinguish between same items or similar items that provide basically same functionalities or effects. A person skilled in the art may understand that the words such as "first" and "second" do not limit a quantity or an execution order, nor indicate a definite difference.

It should be understood that, in this application, descriptions similar to "in a case that...", "if...", "when...", "provided that...", and the like may be used interchangeably.

A person of ordinary skill in the art may be aware that the illustrative logical blocks (illustrative logical blocks) and operations described with reference to embodiments disclosed in this specification may be implemented by electronic hardware or a combination of computer software and electronic hardware. Whether the functionalities are performed by hardware or software depends on particular applications and design constraint conditions of the technical solutions. A person skilled in the art may use different methods to implement the described functionalities for each particular application, but it should not be considered that the implementation goes beyond the scope of this application.

It may be clearly understood by a person skilled in the art that, for the purpose of convenient and brief description, for a detailed working process of the foregoing described system, apparatus, and unit, refer to a corresponding process in the foregoing method embodiment. Details are not described herein again.

In the several embodiments provided in this application, it should be understood that the disclosed system, apparatus, and method may be implemented in other manners. For example, the foregoing described apparatus embodiment is merely an example. For example, the division into the units is merely a logical functionality division and another division manner may be used in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. A part or all of the units may be selected based on actual requirements to achieve the objectives of the solutions in embodiments.

In addition, functional units in embodiments of this application may be integrated into one processing unit, or each of the units may exist alone physically, or two or more units may be integrated into one unit.

In the foregoing embodiments, all or a part of the functionalities of the functional units may be implemented by using software, hardware, firmware, or any combination thereof. When software is used for implementation, all or a part of the functionalities may be implemented in a form of a computer program product. The computer program product includes one or more computer instructions (programs). When the computer program instructions (programs) are loaded and executed on a computer, all or a part of the procedures or functionalities according to embodiments of this application are generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (solid state drive, SSD)), or the like.

When the functionality is implemented in a form of a software functional unit and sold or used as an independent product, the functionality may be stored in a computer-readable storage medium. Based on such an understanding, the technical solutions of this application essentially, or a part contributing to a conventional technology, or a part of the technical solutions may be implemented in a form of a software product. The computer software product is stored in a storage medium, and includes several instructions for instructing a computer device (which may be a personal computer, a server, or a network device) to perform all or a part of operations of the method described in embodiments of this application. The storage medium includes various media that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the communication method is applied to a first core network device and comprises:
sending first information to a second core network device, wherein the first information indicates the second core network device to perform security authentication of a first terminal device after random access of the first terminal device succeeds; and
performing service data transmission of the first terminal device.

2. The communication method according to claim 1, wherein the communication method further comprises:
obtaining first security policy information, wherein the first information comprises the first security policy information, and the first security policy information indicates the second core network device to perform security authentication of the first terminal device after random access of the first terminal device succeeds.

3. The communication method according to claim 2, wherein the obtaining the first security policy information comprises:
receiving the first security policy information from a requester; or
receiving, from the requester, first identification information of the requester; and
obtaining the first security policy information from a third core network device based on the first identification information; or
receiving second identification information of the first terminal device from the requester; and
obtaining the first security policy information from the third core network device based on the second identification information.

4. The communication method according to claim 2 or 3, wherein the first security policy information comprises an authentication manner corresponding to the security authentication.

5. The communication method according to any one of claims 1 to 4, wherein the first information comprises the second identification information of the first terminal device.

6. The communication method according to any one of claims 1 to 5, wherein the communication method further comprises:
receiving a request message of the requester, wherein the request message is used to request to perform a first operation on the first terminal device; and
the sending the first information to the second core network device comprises:
sending the first information to the second core network device after receiving the request message.

7. The communication method according to claim 6, wherein after the receiving the request message of the requester, the communication method further comprises:
sending a random access indication to an access network device via the second core network device, wherein the random access indication indicates to perform random access for the first terminal device.

8. The communication method according to claim 6 or 7, wherein the communication method further comprises:
generating second information corresponding to the first operation; and
sending the second information and third information to the second core network device, wherein the third information indicates the second core network device to send the second information to the first terminal device after performing security authentication of the first terminal device.

9. The communication method according to any one of claims 1 to 5, wherein the communication method further comprises:
receiving a request message of the requester, wherein the request message is used to request to perform a first operation on the first terminal device; and
sending a random access indication to an access network device based on the request message, wherein the random access indication indicates to perform random access for the first terminal device; and
the sending the first information to the second core network device comprises:
sending the first information to the second core network device after receiving a registration request message from the first terminal device, wherein that the first core network device receives, from the first terminal device, the registration request message indicates that random access of the first terminal device succeeds.

10. The communication method according to claim 9, wherein after the sending the first information to the second core network device, the communication method further comprises:
receiving security authentication complete indication information sent by the second core network device; and
sending fourth information to the first terminal device after receiving the security authentication complete indication information sent by the second core network device, wherein the fourth information indicates to perform the first operation on the first terminal device.

11. The communication method according to claim 8 or 10, wherein the first operation is a read operation, a write operation, a disable operation, a locking operation, or a positioning operation.

12. The communication method according to any one of claims 1 to 11, wherein after the performing service data transmission of the first terminal device, the communication method further comprises:
sending fifth information to the second core network device, wherein the fifth information indicates the second core network device to stop performing security authentication of the first terminal device.

13. The communication method according to any one of claims 1 to 12, wherein the first information indicates the second core network device to perform security authentication of at least one terminal device of a same terminal type as the first terminal device after random access of the at least one terminal device succeeds.

14. A communication method, wherein the communication method is applied to a second core network device and comprises:
receiving first information from a first core network device, wherein the first information indicates the second core network device to perform security authentication of a first terminal device after random access of the first terminal device succeeds, and the first core network device is configured to perform service data transmission of the first terminal device; and
performing, based on the first information, security authentication of the first terminal device after random access of the first terminal device succeeds.

15. The communication method according to claim 14, wherein the first information comprises first security policy information, and the first security policy information indicates the second core network device to perform security authentication of the first terminal device after random access of the first terminal device succeeds.

16. The communication method according to claim 15, wherein the first security policy information comprises an authentication manner corresponding to the security authentication; and
the performing, based on the first information, security authentication of the first terminal device after random access of the first terminal device succeeds comprises:
performing, in the authentication manner comprised in the first security policy information in the first information, security authentication of the first terminal device after random access of the first terminal device succeeds.

17. The communication method according to claim 14, wherein the communication method further comprises:
receiving first identification information of a requester from the first core network device; and
obtaining the first security policy information from a third core network device based on the first identification information;
or
obtaining the first security policy information from the third core network device based on second identification information of the first terminal device.

18. The communication method according to claim 17, wherein the first security policy information comprises an authentication manner corresponding to the security authentication; and
the performing, based on the first information, security authentication of the first terminal device after random access of the first terminal device succeeds comprises:
performing, based on the first information and the authentication manner, security authentication of the first terminal device after random access of the first terminal device succeeds.

19. The communication method according to any one of claims 14 to 18, wherein the first information comprises the second identification information of the first terminal device; and
the performing security authentication of the first terminal device comprises:
performing security authentication of the first terminal device identified by the second identification information.

20. The communication method according to claim 19, wherein the communication method further comprises:
receiving a random access indication from the first core network device, wherein the random access indication indicates to perform random access for the first terminal device;
sending the random access indication to an access network device; and
receiving a registration request message from the first terminal device, wherein that the second core network device receives, from the first terminal device, the registration request message indicates that random access of the first terminal device succeeds; and
the performing security authentication of the first terminal device comprises:
performing security authentication of the first terminal device after receiving the registration request message from the first terminal device.

21. The communication method according to claim 20, wherein the registration request message comprises third identification information; and
the performing security authentication of the first terminal device after receiving the registration request message from the first terminal device comprises:
after receiving the registration request message from the first terminal device, if a terminal device identified by the third identification information in the registration request message is the first terminal device identified by the second identification information, performing security authentication of the first terminal device.

22. The communication method according to claim 20 or 21, wherein the communication method further comprises:
receiving third information and second information corresponding to a first operation from the first core network device, wherein the third information indicates the second core network device to send the second information to the first terminal device after performing security authentication of the first terminal device; and
after the performing, by the second core network device, security authentication of the first terminal device, the method further comprises:
sending a registration accept message to the first terminal device based on the third information, wherein the registration accept message comprises the second information.

23. The communication method according to claim 22, wherein the first operation is a read operation, a write operation, a disable operation, a locking operation, or a positioning operation.

24. The communication method according to any one of claims 14 to 19, wherein before the performing, by the second core network device, security authentication of the first terminal device, the communication method further comprises:
receiving a registration request message from the first core network device, wherein the registration request message comprises third identification information of the first terminal device;
the performing security authentication of the first terminal device comprises:
performing security authentication of the first terminal device identified by the third identification information; and
after the performing security authentication of the first terminal device identified by the third identification information, the method further comprises:
sending security authentication complete indication information to the first core network device.

25. The communication method according to any one of claims 14 to 24, wherein after the performing security authentication of the first terminal device, the communication method further comprises:
receiving fifth information from the first core network device, wherein the fifth information indicates the second core network device to stop performing security authentication of the first terminal device.

26. The communication method according to any one of claims 14 to 25, wherein the first information indicates the second core network device to perform security authentication of at least one terminal device of a same terminal type as the first terminal device after random access of the at least one terminal device succeeds; and
the performing, based on the first information, security authentication of the first terminal device after random access of the first terminal device succeeds comprises:
performing, based on the first information, security authentication of the at least one terminal device after random access of the at least one terminal device succeeds.

27. A communication method, wherein the communication method is applied to an access network device and comprises:
receiving a first control plane message from a first terminal device; and
sending a first uplink message to a first core network device or a second core network device based on a type of the first control plane message, wherein the first core network device is configured to perform service data transmission of the first terminal device, and the second core network device is configured to perform security authentication of the first terminal device.

28. The communication method according to claim 27, wherein the first control plane message comprises terminal type information of the first terminal device, and the terminal type information indicates that a terminal type of the first terminal device is a first terminal type; and
before the sending the first uplink message to the first core network device or the second core network device based on the type of the first control plane message, the communication method further comprises:
determining, based on the first terminal type, to send the first uplink message to the first core network device or the second core network device based on the type of the first control plane message.

29. The communication method according to claim 27 or 28, wherein the sending the first uplink message to the first core network device or the second core network device based on the type of the first control plane message comprises:
if the type of the first control plane message is a first type, sending the first uplink message to the first core network device, wherein the message of the first type is used for information transmission; or
if the type of the first control plane message is a second type, sending the first uplink message to the second core network device, wherein the message of the second type is used for security authentication.

30. The communication method according to any one of claims 27 to 29, wherein the communication method further comprises:
receiving, from the first core network device, second information corresponding to a first operation;
receiving a second control plane message from the second core network device; and
when the second control plane message indicates that the security authentication of the first terminal device is completed, sending the second information to the first terminal device.

31. The communication method according to claim 30, wherein the first operation is a read operation, a write operation, a disable operation, a locking operation, or a positioning operation.

32. The communication method according to any one of claims 27 to 31, wherein the communication method further comprises: receiving a random access indication sent by the first core network device or the second core network device, wherein the random access indication indicates to perform random access for the first terminal device; and
performing random access of the first terminal device based on the random access indication; and
the receiving the first control plane message from the first terminal device comprises:
receiving the first control plane message from the first terminal device after performing random access of the first terminal device.

33. A communication apparatus, comprising a processor, wherein the processor is coupled to a memory, and the processor is configured to execute a computer program or instructions stored in the memory, to enable the communication apparatus to implement the communication method according to any one of claims 1 to 32.

34. A computer-readable storage medium, wherein the computer-readable storage medium stores computer instructions, and when the computer instructions are run on an electronic device, the electronic device is caused to perform the communication method according to any one of claims 1 to 32.
